# EUROPEAN PATENT SPECIFICATION

(11) **EP 3 732 230 B1**
(45) Date of publication and mention of the grant of the patent: **14.06.2023**
(21) Application number: 19705661.7
(22) Date of filing: 31.01.2019
(51) Int. Cl.: C08G 77/46, C08G 65/336, C08L 71/02, C08L 83/12

(54) **TRISILOXANE ALKOXYLATE COMPOSITIONS**
TRISILOXAN-ALKOXYLAT-ZUSAMMENSETZUNGEN
COMPOSITIONS D'ALCOXYLATE DE TRISILOXANE

(30) Priority: 02.02.2018 CN 201810106600; 08.02.2018 US 201862627992 P; 24.10.2018 US 201862749738 P
(43) Date of publication of application: 04.11.2020
(73) Proprietor: Momentive Performance Materials Inc., Waterford, NY 12188 (US)
(72) Inventor: POLICELLO, George, A., Ossining, NY 10562 (US); TRUONG, The Linh, Congers, NY 10920 (US); HE, Fengqi, Shanghai, 200125 (CN)
(74) Representative: Herrmann, Uwe
(86) International application number: PCT/US2019/015997
(87) International publication number: WO 2019/152616

(56) References cited:
- WO-A1-2008/111928
- WO-A1-2017/011126
- US-A1- 2007 266 750

## Description

### FIELD OF THE INVENTION

The invention relates to trisiloxane alkoxylate compositions, and in particular, to surfactant compositions useful in chemical formulations having agricultural and other uses. Compositions in accordance with the invention are particularly useful with agrochemicals, more particularly with herbicides, insecticides, fungicides, biologicals and growth regulators.

### BACKGROUND OF THE INVENTION

Many chemical formulations benefit from the inclusion of surfactants. Surfactants can affect the surface tension of the formulation. This can affect the ability of the formulation to spread on the surface to which it is applied. For example, certain surfactants efficiently reduce surface tension. Therefore, they help spread the same amount of an agrochemical formulation over a greater area of the plant to which they are applied. Other agrochemicals are formulated to promote adherence to the plant to which they are applied. Choice of surfactant also affects droplet size and the speed of which the formulation will be taken up by a plant to which it is applied.

Surfactant compositions used with agrochemicals are often formulated to balance properties of different surfactant mixtures. Unfortunately, the formulation of agrochemicals typically results in a trade-off, balancing desired properties where a surfactant composition emphasizing one desired property is at the expense of other desirable properties. Formulating a composition to emphasize one attribute for the same total amount of surfactant is often at the expense of other properties. For example, some low surface tension formulations are ineffective at adhering to a plant and some surfactants are better than others at promoting uptake via the plant's stomata or otherwise. Improper balancing of surfactant properties can result in a chemical formulation that requires a relatively long rain-free period, does not spread well or which can be expensive to apply.

Accordingly, a surfactant composition is desirable that can provide a formulation that overcomes disadvantages of the prior art.

WO 2008/111928 A1 discloses hydrolysis-resistant trisiloxane surfactants having polyalkylene oxide substituents on their central (D) silicon atom.

### SUMMARY OF THE INVENTION

Generally speaking, in accordance with the invention, combinations of at least two trisiloxane surfactants in accordance with invention can unexpectedly provide synergistic improvements in at least spreading, adhering and/or uptake properties of chemical formulations containing those surfactants. This synergy is measured as compared to the properties that would be predicted from the linear additive properties of proportional amounts of the individual surfactants. For example, compositions in accordance with the invention can reduce dynamic surface tension more effectively (synergistically) than based on the surface tension reduction properties of proportional amounts of the individual components alone. Compositions in accordance with the invention can lead to synergistically improved spread area as well as droplet adhesion of agrochemical sprays on plant surfaces. Additionally, compositions in accordance with the invention can provide an unexpected synergistic increase in the level of stomatal infiltration or other plant uptake properties relative to the linearly additive combination and often, each of the individual components alone. The combination of improved droplet adhesion, spreading and uptake allow for broader formulation latitude, making it easier to balance overall desired performance, without overly diminishing desirable properties.

In accordance with preferred embodiments of the invention, an organosilicone surfactant composition is provided, comprising a mixture of at least two trisiloxane alkoxylates. In one embodiment of the invention, the first trisiloxane alkoxylate has a first, lower molecular weight, provides a first, greater reduction in surface tension and has less than 10 alkylene oxide units (i.e. polyoxyethylene or polyoxyethylene/polyoxypropylene copolymers). The second trisiloxane alkoxylate has a second, higher molecular weight, provides a second, lower reduction in surface tension and has 10 or more alkylene oxide units (i.e. polyoxyethylene or polyoxyethylene/polyoxypropylene copolymers). The combination of these two different surfactants provides synergistic improvement in spreading, adherence and/or uptake, as compared to the linearly additive properties predicted from the properties of the individual surfactants.

Each trisiloxane alkoxylate surfactant is independently selected from:
(1) A first trisiloxane alkoxylate surfactant (TSA-1) having the general formula (l):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ and R⁷ are independently selected from the group consisting of a monovalent hydrocarbon radical having from 1-4 carbon atoms,
   either (R⁶ is R⁹ and R⁸ is Z) or (R⁶ is Z and R⁸ is R⁹),
   where R⁹ is a monovalent hydrocarbon radical having from 1-4 carbon atoms.
   Z is a polyalkyleneoxide group of the general formula:

      -R¹⁰ -O-[C₂H₄O ]ₐ-[C₃H₆O ]_{b} -[C₄H₈ O]_{c}-R¹¹ ;
   where subscripts a is 2 to 9, b is 0 to 7, and c is 0 to 7 and satisfy the following relationships: 2≤a+b+c<10, with a ≥2
   and with the limitation that when
   b+c = 0, then a is 5 to 9, preferably 6 to 8
   R¹⁰ is a linear or branched divalent hydrocarbon group of 3 to 4 carbon atoms
   R¹¹ is selected from the group consisting of H, monovalent hydrocarbon radicals of from 1 to 6 carbon atoms and acetyl.
   and
(2) A second trisiloxane alkoxylate surfactant (TSA-2) having the general formula (ll):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹² R¹³ R¹⁴ R¹⁵ R¹⁷ and R¹⁸ are independently selected from the group consisting of monovalent hydrocarbon radicals having from 1-4 carbon atoms
   either (R¹⁶ is R²⁰ and R¹⁹ is Q) or (R¹⁶ is Q and R¹⁹ is R²⁰)
      where R²⁰ is a monovalent hydrocarbon radical having from 1-4 carbon atoms
      Q is a polyalkyleneoxide group of the general formula:

         -R²²-O-[C₂H₄O ]_{d}-[C₃H₆O ]ₑ-[C₄H₈O]_{f}-R²³ ;
   where subscripts d is 3 to 35, e is 0 to 50, and f is 0 to 20, provided that e+f is ≥1, and
   satisfy the following relationships: 10≤d+e+f≤75 with d ≥5.
   R²² is a linear or branched divalent hydrocarbon group of 3 to 4 carbon atoms
   R²³ is selected from the group consisting of H, monovalent hydrocarbon radicals of from 1 to 6 carbon atoms and acetyl.

A formulation comprising the surfactant compositions in accordance with the invention can comprise one or more of a herbicide, an insecticide, a fungicide, a plant growth regulator, a biological, a micronutrient or a fertilizer. The surfactants can be present in the formulation at a concentration between 0.1% and 95%, more preferably between 2.5% and 70%. Formulations in accordance with the invention can be sold as concentrates, which are intended to be diluted, typically with water, prior to application in the field. When used in a "Tank-mix" application where the formulation is ready to be applied in the field as intended, the concentration of the surfactants formulated in accordance with an embodiment of the invention is preferably between 0.005% and 2%.

### BRIEF DESCRIPTION OF THE DRAWINGS

For a fuller understanding of the invention, reference is had to the following description, taken in connection with the accompanying drawings, in which:

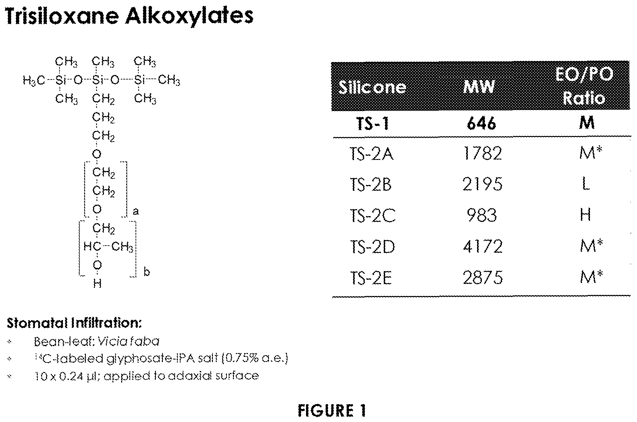

Fig. 1 depicts an example of a first trisiloxane alkoxylate TSA-1-A (Chart ID: TS-1) and five different examples of a second trisiloxane alkoxylates (TSA-2-A, B, C, D and E), in accordance with the invention;

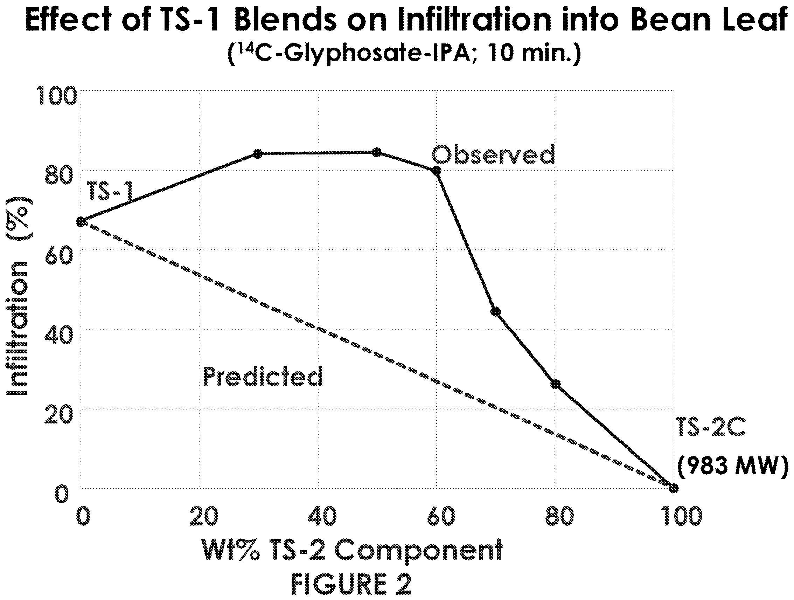

Fig. 2 is a graph depicting the effect of trisiloxane blends, in accordance with the invention, on glyphosate infiltration into bean leaves

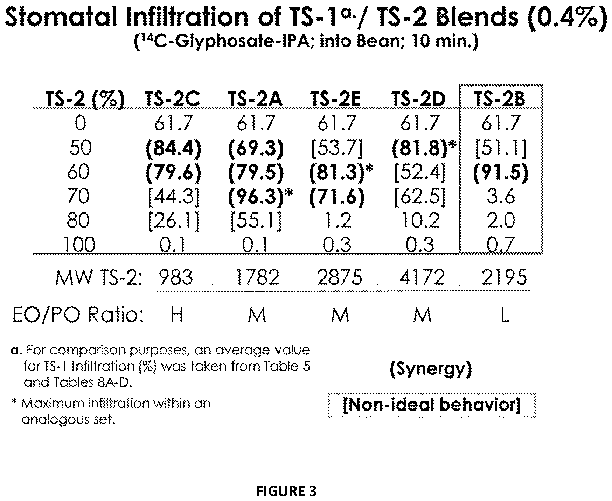

Fig. 3 presents a chart showing the stomatal infiltration of trisiloxane blends in accordance with the invention;

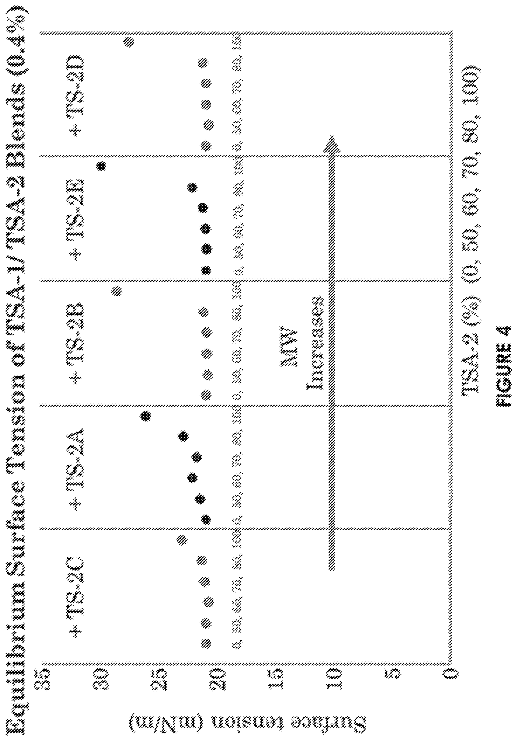

Fig. 4 is a graph depicting the equilibrium surface tension of different trisiloxane blends in accordance with the invention;
Fig. 5 is a graph showing the influence of surface tension on infiltration into bean leaves of trisiloxane blends in accordance with the invention;

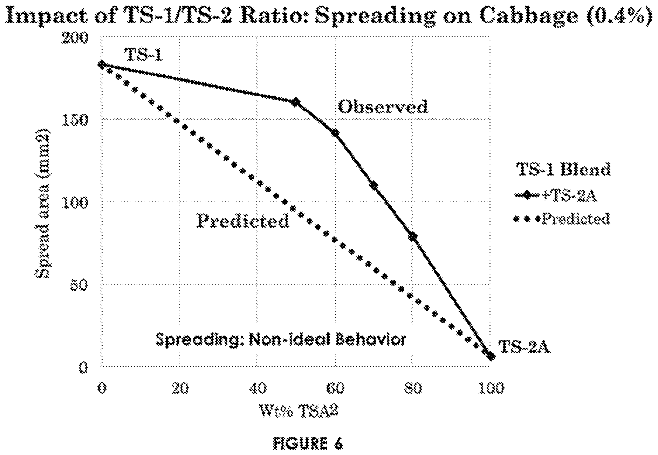

Fig. 6 is a graph showing the enhancement of drop spreading on cabbage leaves as the ratio of certain trisiloxane components in accordance with the invention is varied;

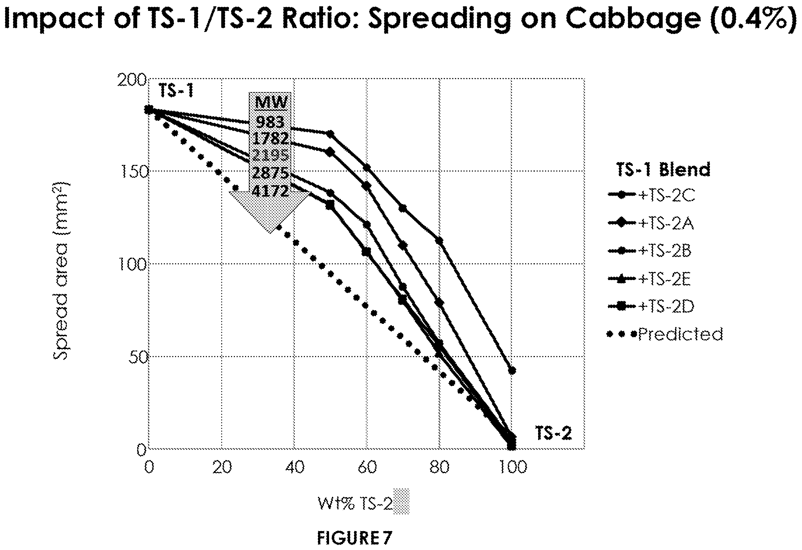

Fig. 7 is a graph showing the change in drop spreading on cabbage leaves as the ratio of different trisiloxane components in accordance with the invention is varied;
Fig. 8 is a graph showing the effect of spreading on glyphosate infiltration into bean leaves;
Fig. 9 is a graph showing the change in dynamic surface tension as the ratio of trisiloxane components in accordance with the invention is varied;
Fig. 10 is a graph showing the dynamic surface tension as the ratio of different trisiloxane components in accordance with the invention is varied;
Fig. 11 is a graph showing the dynamic surface tension as the ratio of different trisiloxane components in accordance with the invention is varied;
Fig. 12 is a graph showing the dynamic surface tension as the ratio of different trisiloxane components in accordance with the invention is varied;
Fig. 13 is a graph showing the dynamic surface tension as the ratio of different trisiloxane components in accordance with the invention is varied; and
Fig. 14 presents data showing how the spreading of a 30/70 ratio (TS-1/TS-2A) of trisiloxane components in accordance with the invention exceeds the additive, predicted value.

### DETAILED DESCRIPTION OF THE PREFERRED EMBODIMENTS OF THE INVENTION

In the specification and claims herein, the following terms and expressions are to be understood as indicated.

The term "adjuvant" means any composition, material or substance which increases the efficacy of a bioactive material.

The term "bioactive" refers to an agricultural chemical or material, including but not limited to pesticides, e.g., herbicides, fungicides, insecticides, acaricides and molluscides; plant nutrients; defoliants; and, plant growth regulators.

The term "agrochemical," or "agricultural chemical," as used herein shall be understood to refer to all bioactive compounds, biological materials including extracts, fractions and by-products thereof, living organisms including microorganisms, and the like, that are suitable for agricultural use such as pesticides, herbicides, fungicides, insecticides, nematocides, larvacides, mitocides, ovacides, plant growth regulators, seed treatment agents, etc.

The term "agricultural composition" refers to a composition that is applied to plants, weeds, landscapes, grass, trees, pastures, or for other agricultural applications. Agricultural compositions can be provided in concentrated or diluted form. An agricultural composition may or may not contain an agrochemical (agricultural chemical).

"Surfactants" can improve spray deposition properties by reducing the surface tension of the agricultural composition to which they are added, which may be a solution, mixture, dispersion or emulsion and thereby enhance droplet adhesion on foliar surfaces. As used herein, the term surfactant will include emulsifiers, dispersants and spreaders that affect the surface tension of compositions to which they are added.

An organosilicone surfactant composition in accordance with preferred embodiments of the invention comprises a combination, such as a mixture of at least two trisiloxane alkoxylates (TSA-1 and TSA-2) each independently selected from:
A first trisiloxane alkoxylate (TSA-1) having the general formula (I):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ and R⁷ are independently selected from the group consisting of a monovalent hydrocarbon radical having from 1-4 carbon atoms
   either (R⁶ is R⁹ and R⁸ is Z) or (R⁶ is Z and R⁸ is R⁹),
   where R⁹ is a monovalent hydrocarbon radical having from 1-4 carbon atoms.
   Z **is** a polyalkyleneoxide group of the general formula:
      -R¹⁰-O-[C₂H₄O ]ₐ-[C₃H₆O ]_{b} -[C₄H₈ O]_{c}-R¹¹ ; where subscripts a is 2 to 9, b is 0 to 7, and c is 0 to 7, and satisfy the following relationships: 2<a+b+c<10, with a ≥2
   and with the limitation that when b+c = 0, then a is 5 to 9, preferably 6 to 8
   R¹⁰ is a linear or branched divalent hydrocarbon group of 3 to 4 carbon atoms
   R¹¹ is selected from the group consisting of H, monovalent hydrocarbon radicals of from 1 to 6 carbon atoms and acetyl.
   And
A second trisiloxane alkoxylate (TSA-2) having the general formula (II):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹² R¹³ R¹⁴ R¹⁵ R¹⁷ and R¹⁸ are independently selected from the group consisting of a monovalent hydrocarbon radical having from 1-4 carbon atoms
   either (R¹⁶ is R²⁰ and R¹⁹ is Q) or (R¹⁶ is Q and R¹⁹ is R²⁰)
   where R²⁰ is a monovalent hydrocarbon radical having from 1-4 carbon atoms.
   Q is a polyalkyleneoxide group of the general formula:
      -R²²-O-[C₂H₄O ]_{d}-[C₃H₆O ]ₑ-[C₄H₈O]_{f}-R²³ ; where subscripts d is 3 to 35, e is 0 to 50, and f is 0 to 20, providing that e+f is ≥1, and satisfy the following relationships: 10≤d+e+f≤75 with d ≥5. However, in other preferred embodiments, e+f is 0 to 50, preferably e+f is ≥ 1, and satisfy the following relationships: 10≤d+e+f≤75 with d ≥5.
   R²² is a linear or branched divalent hydrocarbon group of 3 to 4 carbon atoms
   R²³ is selected from the group consisting of H, monovalent hydrocarbon radicals of from 1 to 6 carbon atoms and acetyl.

In other preferred embodiments of the invention, the trisiloxane alkoxylate surfactant (spreader) composition of the invention comprises a mixture of at least two different trisiloxane alkoxylates, where
a. A first trisiloxane alkoxylate having the general formula (III):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ R⁶ and R⁷ are methyl
   R⁸ is Z
   Z is a polyalkyleneoxide group of the general formula:
      -R¹⁰ -O-[C₂H₄O ]ₐ-[C₃H₆O ]_{b} -[C₄H₈ O]_{c}-R¹¹ ; where subscripts a is 5 to 9; b, and c are zero
   R¹⁰ is a linear or branched divalent hydrocarbon group of 3 to 4 carbon atoms
   R¹¹ is selected from the group consisting of H or methyl
   And
b. A second trisiloxane alkoxylate (TSA-2) having the general formula (IV):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹², R¹³, R¹⁴, R¹⁵, R¹⁶, R¹⁷ and R¹⁸ are methyl
   R¹⁹ is Q
   Q is a polyalkyleneoxide group of the general formula:
      -R²²-O-[C₂H₄O ]_{d}-[C₃H₆O ]ₑ-[C₄H₈O]_{f}-R²³ ; where subscripts d is 8 to 12, e is 2 to 5, and f is 0; with the provision that d+e+f≥10
   R²² is a linear or branched divalent hydrocarbon group of 3 to 4 carbon atoms
   R²³ is selected from the group consisting of H or methyl.

In another embodiment of the invention, the organosilicone surfactant (spreader) composition of the present invention comprises a mixture of at least two different trisiloxane alkoxylates, where
a. A first trisiloxane alkoxylate (TSA-1) having the general formula (V):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ R⁶ and R⁷ are methyl
   R⁸ is Z
   Z is a polyalkyleneoxide group of the general formula:
      -R¹⁰ -O-[C₂H₄O ]ₐ-[C₃H₆O ]_{b} -[C₄H₈ O]_{c}-R¹¹ ; where subscripts a is 5 to 8; b is 2 to3, and c is zero, with the provision that a+b+c<10.
   R¹⁰ is a linear or branched divalent hydrocarbon group of 3 to 4 carbon atoms
   R¹¹ is selected from the group consisting of H or methyl,
   Is blended with
b. A second trisiloxane alkoxylate (TSA-2) having the general formula (VI):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹², R¹³, R¹⁴, R¹⁵, R¹⁶, R¹⁷ and R¹⁸ are methyl
   R¹⁹ is Q
   Q is a polyalkyleneoxide group of the general formula:
      -R²²-O-[C₂H₄O ]_{d}-[C₃H₆O ]ₑ-[C₄H₈O]_{f}-R²³ ; where subscripts d is 7 to 12, e is 20 to 30, and f is 0.
   R²² is a linear or branched divalent hydrocarbon group of 3 to 4 carbon atoms
   R²³ is selected from the group consisting of H or methyl.

In yet another embodiment of the invention, the organosilicone surfactant (spreader) composition of the invention comprises a mixture of at least two different trisiloxane alkoxylates, where
a. A first trisiloxane alkoxylate (TSA-1) having the general formula (VII):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ R⁶ and R⁷ are methyl
   R⁸ is Z
   Z is a polyalkyleneoxide group of the general formula:
      -R¹⁰ -O-[C₂H₄O ]ₐ-[C₃H₆O ]_{b} -[C₄H₈ O]_{c}-R¹¹ ; where subscripts a is 5 to 7; b is 2 to3, and c is zero, with the provision that a+b+c<10.
   R¹⁰ is a linear or branched divalent hydrocarbon group of 3 to 4 carbon atoms
   R¹¹ is selected from the group consisting of H or methyl,
   Is blended with
b. a second trisiloxane alkoxylate (TSA-2) having the general formula (VIII):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹², R¹³, R¹⁴, R¹⁵, R¹⁶, R¹⁷ and R¹⁸ are methyl
   R¹⁹ is Q
   Q is a polyalkyleneoxide group of the general formula:
      -R²²-O-[C₂H₄O ]_{d}-[C₃H₆O ]ₑ-[C₄H₈O]_{f}-R²³ ; where subscripts d is 10 to 12, e is 12 to 18, and f is 0 or 1.
   R²² is a linear or branched divalent hydrocarbon group of 3 to 4 carbon atoms
   R²³ is selected from the group consisting of H or methyl.

In still yet another embodiment the invention, an organosilicone surfactant (spreader) composition comprises a mixture of at least two different trisiloxane alkoxylates, where
a. A first trisiloxane alkoxylate (TSA-1) having the general formula (IX):

   M¹DM²

   where
   M¹ = (R¹)(R²)(R³)SiO_{0.5}
   M² = (R⁴)(R⁵)(R⁶)SiO_{0.5}
   D = (R⁷)(R⁸)SiO
   where
   R¹ R² R³ R⁴ R⁵ R⁶ and R⁷ are methyl
   R⁸ is Z
   Z is a polyalkyleneoxide group of the general formula:
      -R¹⁰ -O-[C₂H₄O ]ₐ-[C₃H₆O ]_{b} -[C₄H₈ O]_{c}-R¹¹ ; where subscripts a is 5 to 7; b is 1 to 3, and c is zero, with the provision that a+b+c<10.
   R¹⁰ is a linear or branched divalent hydrocarbon group of 3 to 4 carbon atoms
   R¹¹ is selected from the group consisting of H or methyl,
   Is blended with
b. A second trisiloxane alkoxylate (TSA-2) having the general formula (X):

   M³D¹M⁴

   where
   M³ = (R¹²)(R¹³)(R¹⁴)SiO_{0.5}
   M⁴ = (R¹⁵)(R¹⁶)(R¹⁷)SiO_{0.5}
   D¹ = (R¹⁸)(R¹⁹)SiO
   where
   R¹², R¹³, R¹⁴, R¹⁵, R¹⁶, R¹⁷ and R¹⁸ are methyl
   R¹⁹ is Q
   Q is a polyalkyleneoxide group of the general formula:
      -R²²-O-[C₂H₄O ]_{d}-[C₃H₆O ]ₑ-[C₄H₈O]_{f}-R²³ ; where subscripts d is 10 to 12, e is 12 to 18, and f is 0 or 1.
   R²² is a linear or branched divalent hydrocarbon group of 3 to 4 carbon atoms
   R²³ is selected from the group consisting of H or methyl.

### Method for producing trisiloxane alkoxylate components of the present invention:

One method of producing the trisiloxane alkoxylate components of the present invention is to react a molecule of a hydride intermediate of the following formula, with an olefinically (i.e. Allyl, or methallyl polyalkyleneoxide):

(CH₃)₃Si-O-Si(CH₃)(H)-O-Si (CH₃)₃

Reaction of the hydride intermediate (heptamethyltrisiloxane) with one or more allyl- or methallyl polyethers, e.g., of the general formula:
H₂C=CR^{k} CH₂-O-(C₂H₄O)ₐ(C₃H₆O)_{b}(C₄H₈O)_{c}-R¹¹, in which R¹¹ is hydrogen or a monovalent hydrocarbon radical of from 1 to 6 carbon atoms and acetyl. R^{k} is hydrogen or methyl. Subscripts a, b and c are as previously defined, is carried out under catalytic hydrosilylation reaction conditions to provide polyether-modified trisiloxane alkoxylate compounds of the invention.

Suitable olefinically modified polyethers, including mixtures thereof, that may be reacted with the heptamethyltrisiloxane hydride intermediate to provide polyether-modified trisiloxane alkoxylate surfactants of the invention include polyethyleneglycol allylether, polyethyleneglycol polypropyleneglycol allylether, methoxy polyethyleneglycol allylether, methoxy polyethyleneglycol polypropyleneglycol allylether, butoxy polyethyleneglycol polyproplylene glycol allylether, methoxy polypropyleneglycol allylether, polyethyleneglycol polypropyleneglycol polybutyleneglycoll allylether, polyethleneglycol polybutyleneglycol allylether, polyethyleneglycol polypropyleneglycol polybutyleneglycol allylether, and their mixtures. The allyl- and methallyl-terminated polyethers include those of the random and block types.

Hydrosilylation catalysts and their use are well known in the art and include complexes of such metals as rhodium, ruthenium, palladium, osmium, iridium and platinum. Many types of platinum-containing hydrosilylation catalysts can be used herein, e.g., those having the formula PtCl₂olefin and HPtCl₃olefin as described in U.S. Patent No. 3,159,601. Other platinum-containing hydrosilylation catalysts include complexes of chloroplatinic acid with up to 2 moles per gram of platinum and an alcohol, ether, aldehyde and mixtures thereof as described in U.S. Patent No. 3,220,972. Additional platinum-containing hydrosilylation catalysts useful in preparing the polyether-modified trisiloxane alkoxylates of the present invention are described in U.S. Patent Nos. 3,715,334, 3,775,452 and 3,814,730 (Karstedt's catalyst). Further background concerning hydrosilylation may be found in J.L. Spier, "Homogeneous Catalysis of Hydrosilylation by Transition Metals", in Advances in Organometallic Chemistry, volume 17, pages 407 through 447, F.G.A. Stone and R. West editors, published by Academic Press (New York, 1979). Those skilled in the art can readily determine the effective amount of catalyst for a given hydrosilylation reaction. Generally, an amount of hydrosilylation catalyst ranging from about 0.1 to 50 parts per million by weight of the desired hydrosilylation will be satisfactory.

One process for preparing the polyether-modified trisiloxane alkoxylates of the invention can be considered to proceed as follows in Structure 1:

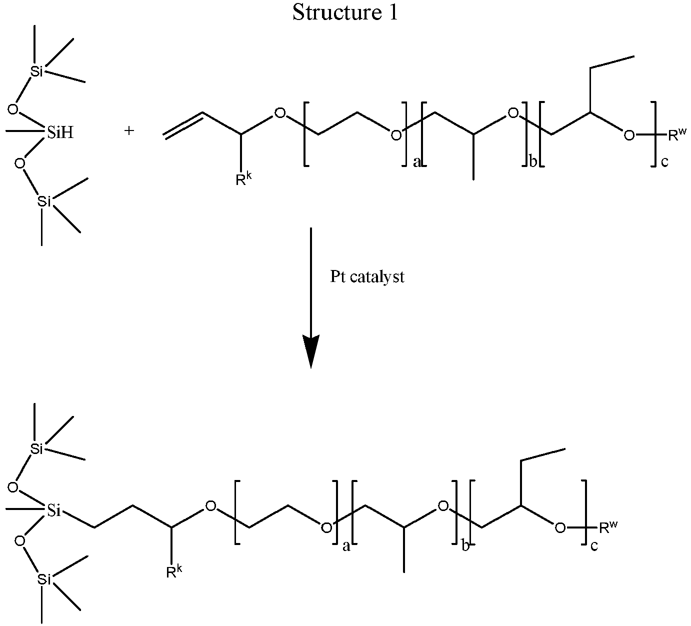

### Uses For The Compositions Of The Invention:

Compositions of the present invention may be utilized in a variety of forms: as liquid solutions, dispersions of solids in liquids, dispersions of liquids in liquids as the previously described emulsions, solid mixtures or solid solutions either separately or in the forms previously listed in combination one with the other.

### Pesticide - Agriculture, Horticulture, Turf, Ornamental and Forestry:

Many pesticide applications require the addition of an adjuvant to the spray mixture to improve wetting and spreading on foliar surfaces. Often that adjuvant is a surfactant, which can perform a variety of functions, such as increasing spray droplet retention on difficult to wet leaf surfaces, enhance spreading to improve spray coverage, or to provide penetration of the herbicide into the plant cuticle. These adjuvants are provided either as a tank-side additive or used as a component in pesticide formulations.

Typical uses for pesticides include agricultural, horticultural, turf, ornamental, home and garden, veterinary and forestry applications. Pesticide compositions in accordance with the invention can include at least one pesticide, where the trisiloxane alkoxylate surfactants of the present invention are present at an amount sufficient to deliver between 0.005% and 2% to the final use concentration, either as a concentrate or diluted in a tank mix. Optionally the pesticidal composition may include excipients, cosurfactants, solvents, foam control agents, deposition aids, drift retardants, biologicals, micronutrients, fertilizers and the like.

The term pesticide herein means any compound used to destroy pests, e.g., rodenticides, insecticides, miticides, fungicides, and herbicides. Illustrative examples of pesticides that can be employed include, but are not limited to, growth regulators, photosynthesis inhibitors, pigment inhibitors, mitotic disrupters, lipid biosynthesis inhibitors, cell wall inhibitors, and cell membrane disrupters.

The amount of pesticide employed in formulations in accordance with the invention varies with the type of pesticide employed. More specific examples of pesticide compounds that can be used with the compositions of the invention are, but are not limited to, herbicides and growth regulators, such as: phenoxy acetic acids, phenoxy propionic acids, phenoxy butyric acids, benzoic acids, triazines and s-triazines, substituted ureas, uracils, bentazon, desmedipham, methazole, phenmedipham, pyridate, amitrole, clomazone, fluridone, norflurazone, dinitroanilines, isopropalin, oryzalin, pendimethalin, prodiamine, trifluralin, glyphosate, sulfonylureas, imidazolinones, clethodim, diclofop-methyl, fenoxaprop-ethyl, fluazifop-p-butyl, haloxyfop-methyl, quizalofop, sethoxydim, dichlobenil, isoxaben, bipyridylium compounds, dicamba and tembotrione..

Fungicide compositions that can be used with compositions in accordance with the invention include, but are not limited to, aldimorph, tridemorph, dodemorph, dimethomorph; flusilazol, azaconazole, cyproconazole, epoxiconazole, furconazole, propiconazole, tebuconazole and the like; imazalil, thiophanate, benomyl carbendazim, chlorothialonil, dicloran, trifloxystrobin, fluoxystrobin,dimoxystrobin, azoxystrobin, furcaranil, prochloraz, flusulfamide, famoxadone, captan, maneb, mancozeb, dodicin, dodine, and metalaxyl.

Insecticides, including larvacide, miticide and ovacide compounds that can be used with composition in accordance with the invention, include, but not are not limited to, Bacillus thuringiensis, spinosad, abamectin, doramectin, lepimectin, pyrethrins, carbaryl, primicarb, aldicarb, methomyl, amitraz, boric acid, chlordimeform, novaluron, bistrifluron, triflumuron, diflubenzuron, imidacloprid, diazinon, acephate, endosulfan, kelevan, dimethoate, azinphos-ethyl, azinphos-methyl, izoxathion, chlorpyrifos, clofentezine, lambda-cyhalothrin, permethrin, bifenthrin, cypermethrin and the like.

### Fertilizers and micronutrients:

Fertilizers or micronutrients that can be used with composition in accordance with the invention, include, but are not limited to, zinc sulfate, ferrous sulfate, ammonium sulfate, urea, urea ammonium nitrogen, ammonium thiosulfate, potassium sulfate, monoammonium phosphate, urea phosphate, calcium nitrate, boric acid, potassium and sodium salts of boric acid, phosphoric acid, magnesium hydroxide, manganese carbonate, calcium polysulfide, copper sulfate, manganese sulfate, iron sulfate, calcium sulfate, sodium molybdate, calcium chloride.

The pesticide or fertilizer may be a liquid or a solid. If a solid, it is preferable that it is soluble in a solvent, or the quaternary organosilicon surfactant of the present invention, prior to application, and the silicone may act as a solvent, or surfactant for such solubility or additional surfactants may perform this function.

### Agricultural Excipients:

Buffers, preservatives and other standard excipients known in the art also may be included in formulations including compositions in accordance with the invention.

Solvents may also be included in formulations containing compositions in accordance with the invention. These solvents can be in a liquid state at room temperature. Examples include water, alcohols, aromatic solvents, oils (i.e. mineral oil, vegetable oil, silicone oil, and so forth), lower alkyl esters of vegetable oils, fatty acids, ketones, glycols, polyethylene glycols, diols, paraffinics, and so forth. Particularly preferred solvents include 2, 2, 4 trimethyl, 1 3 pentane diol and alkoxylated (especially ethoxylated) versions thereof as illustrated in US Patent No. 5,674,832, or n-methyl-pyrrilidone.

### Cosurfactants:

Cosurfactants useful in formulations in accordance with the invention include nonionic, cationic, anionic, amphoteric, zwitterionic, polymeric surfactants, or any mixture thereof. Surfactants are typically hydrocarbon based, silicone based or fluorocarbon based.

Moreover, other cosurfactants, that have short chain hydrophobes that do not interfere with superspreading as described in US Patent No. 5,558,806can also be useful.

Preferred surfactants to be included in formulations in accordance with the invention include alkoxylates, especially ethoxylates, containing block copolymers including copolymers of ethylene oxide, propylene oxide, butylene oxide, and mixtures thereof; alkylarylalkoxylates, especially ethoxylates or propoxylates and their derivatives including alkyl phenol ethoxylate; arylarylalkoxylates, especially ethoxylates or propoxylates. and their derivatives; amine alkoxylates, especially amine ethoxylates; fatty acid alkoxylates; fatty alcohol alkoxylates; alkyl sulfonates; alkyl benzene and alkyl naphthalene sulfonates; sulfated fatty alcohols, amines or acid amides; acid esters of sodium isethionate; esters of sodium sulfosuccinate; sulfated or sulfonated fatty acid esters; petroleum sulfonates; N-acyl sarcosinates; alkyl polyglycosides; alkyl ethoxylated amines; and so forth.

Specific examples of surfactants include alkyl acetylenic diols (SURFONYL- Air Products), pyrrilodone based surfactants (e.g., SURFADONE - LP 100 - Ashland), 2-ethyl hexyl sulfate, isodecyl alcohol ethoxylates (e.g., RHODASURF DA 530 - Rhodia), ethylene diamine alkoxylates (TETRONICS - BASF), ethylene oxide/propylene oxide copolymers (PLURONICS - BASF), Gemini type surfactants (Rhodia) and diphenyl ether Gemini type surfactants (e.g. DOWFAX - Dow Chemical).

Preferred surfactants also include ethylene oxide/propylene oxide copolymers (EO/PO); amine ethoxylates; alkyl polyglycosides; oxo-tridecyl alcohol ethoxylates, and so forth.

In a preferred embodiment of the invention, agrochemical formulations containing compositions in accordance with the invention further comprises one or more agrochemical ingredients. Suitable agrochemical ingredients include, but are not limited to, herbicides, insecticides, growth regulators, fungicides, miticides, acaricides, fertilizers, biologicals, plant nutritionals, micronutrients, biocides, paraffinic mineral oil, methylated seed oils (i.e. methylsoyate, methylcanolate, ethylsoyate and ethylcanolate), vegetable oils (such as soybean oil corn oil and canola oil), water conditioning agents such as Choice^{®} (Loveland Industries, Greeley, CO) and Quest^{®} (Helena Chemical, Collierville, TN), modified clays such as Surround^{®} (NovaSource), foam control agents, surfactants, wetting agents, dispersants, emulsifiers, deposition aids, antidrift components, and water.

Suitable agrochemical formulations are made by combining, in a manner known in the art, such as, by mixing one or more of the above components with the trisiloxane surfactant composition of the present invention, either as a tank-mix, or as an "In-can" formulation. The term "tank-mix" herein means the addition of at least one agrochemical to a spray medium, such as water or oil, at the point of use. The term "In-can" herein refers to a formulation or concentrate containing at least one agrochemical component. The "In-can" formulation may then be diluted to use-concentration at the point of use, typically in a Tank-mix, or it may be used undiluted.

### EXAMPLES

The following examples are presented for purposes of illustration only and should not be construed as limiting.

### Experimental Procedures

### Preparation Examples:

### Preparation Example 1 - Synthesis of Trisiloxane Alkoxylates:

Compositions in accordance with the invention may be prepared by the hydrosilation of 1,1,1,3,5,5,5 heptamethyltrisiloxane with an allylpolyalkyleneoxide, to yield a polyalkyleneoxide modified heptamethyltrisiloxane surfactant.

10g (0.005 mol) of heptamethyl trisiloxane, 92g (0.061 mol) of allylpolyethylene oxide (mw 1520 g/mol), along with 31 µl tributyl amine, were charged into a 3-neck flask attached with a condenser, under nitrogen, and heated at 80-82 °C. With stirring, the mixture was catalysed with 102 µl chloroplatinic acid (10 ppm). The reaction is exothermic and the temperature was allowed to reach ~100°. The reaction mixture was then maintained at a temperature of 85°C for 2h, at which point the product showed no residual heptamethyl trisiloxane (via alcoholic KOH test). The product was cooled to room temperature and filtered. The resulting product had an aqueous surface tension of 26.5 mN/m (0.1 wt%) and a critical micelle concentration of 0.006 wt% (ID: TSA-2A).

Other trisiloxane components of the present invention were made in a similar fashion as described above. Table 1 provides a description of the trisiloxane alkoxylate components for the primary trisiloxane alkoxylate components (TSA-1) of the invention.

### Description of TSA-1 and TSA-2 Components:

Table 1 provides a description of the TSA-1 (Primary Trisiloxane Alkoxylate) components of the present invention.

[(CH₃)₃SiO]₂Si(CH₃) -CH₂CH₂CH2-O-(C₂H₄O)ₐ (C₃H₆O)_{b} (C₄H₈O)_{c} R¹¹

**Table 1-Composition of TSA-1 components**

| **ID** | **a** | **b** | **c** | **R¹¹** | **TSA Average MW** |
|---|---|---|---|---|---|
| TSA-1-A | 5 | 2.5 | 0 | H | 646 |
| TSA-1-B | 8 | 0 | 0 | H | 633 |
| TSA-1-C | 8 | 0 | 0 | CH₃ | 647 |

The general formula for TSA-2 components (Second Trisiloxane Alkoxylate) of the present invention are described below in Table 2.

[(CH3)3SiO]2Si(CH3) -CH₂CH₂CH2-O-(C₂H₄O)_{d} (C₃H₆O)ₑ (C₄H₈O)_{f} R²³

**Table 2- Description of TSA-2 Components**

| **ID** | **d** | **e** | **f** | **R²³** | **EO% (In TSA)** | **TSA Average MW** |
|---|---|---|---|---|---|---|
| TSA-2-A | 13 | 16 | 0 | H | 33 | 1782 |
| TSA-2-B | 9.0 | 26 | 0 | H | 19 | 2195 |
| TSA-2-C | 12 | 3 | 0 | H | 57 | 983 |
| TSA-2-D | 33 | 42 | 0 | H | 35 | 4172 |
| TSA-2-E | 22 | 28 | 0 | H | 34 | 2875 |

### Comparative Organosilicon Surfactants

Note the Comparative organosilicon surfactants are the individual TSA-1 and TSA-2 components (Not blends).

### Preparation Example-2: Blends of TSA components

Blends of the trisiloxane components of the invention were made by mixing the two TSA components in the desired ratio (Weight % or Wt/vol% as indicated below). Each blend is described in the examples below.

### Results

### Example 1: Spreading Properties of Trisiloxane Alkoxylate Blends (0.1% and 0.2%) on Cabbage leaf

Spreading on cabbage leaf was determined using a droplet size of 0.5 µl; 12 replicate droplets of each treatment applied to 3 leaves, each taken from a different plant. All treatments contained fluorescent dye Blankophore-P, used at 0.5%. All treatments were readily solubilized in deionized water. Test samples of each blend were prepared at 0.1% and 0.2% (w/v).

Table 3 demonstrates that spreading of the TSA-Blends of the present invention gave an unexpected synergistic increase in spreading relative to a linear additive predicted value (weighted average of the spread value for the individual components). All of the blends at either 0.1% or 0.2% gave more than a 20% increase in spread area over the predicted value for the blends.

**Table 3-Spread Properties of TSA Blends**

| **Blend Ratio** | | **Spread at 0.1%** | | **Spread Improvement** | **Spread at 0.2%** | | **Spread Improvement** |
|---|---|---|---|---|---|---|---|
| **TSA-1-A%** | **TSA-2-A%** | **Observed** | **Predicted** | | **Observed** | **Predicted** | |
| 100 | 0 | 47.0 | 47.00 | NA | 93.4 | 93.4 | NA |
| 50 | 50 | 37.1 | 29.2 | 27% | 71.2 | 57.7 | 23.4% |
| 40 | 60 | 32.00 | 25.6 | 25% | 67.3 | 50.56 | 33.1% |
| 30 | 70 | 30.4 | 22.1 | 38% | 62.8 | 43.42 | 44.6% |
| 20 | 80 | 25.6 | 18.5 | 38% | 54 | 36.28 | 48.8% |
| 0 | 100 | 11.4 | 11.4 | NA | 22 | 22 | NA |

### Example 3 - Effect of Adjuvant Composition on Droplet Adhesion

Spray droplet adhesion (as a % of impacted droplets) was determined using a piezoelectric droplet generator to form mono-sized droplets of approximately 600 µm (Stevens et al. (1993) Adhesion of spray droplets to foliage: The role of dynamic surface tension and advantages of organosilicone surfactants. Pestic. Sci., 38, 237-245). Droplets were impacted from a height of 53 cm, to leaves mounted at 22.5 degrees. Cabbage foliage (difficult-to-wet) was used as the impaction surface, with a leaf angle of 22.5°. All treatments contained fluorescent dye Blankophore-P, used at 1%.

Table 4 demonstrates that the compositions for the present invention provided similar or better droplet adhesion on cabbage leaf relative to the linear additive predicted value for the mixtures of TSA-1-A and TSA-2-A. In certain compositions, the mixing ratios of the selected surfactants was not optimal, but at least a statistically significant decrease was not observed, compared to the prediction. Adhesion increased with an increase in adjuvant concentration.

**Table 4 - Effect of Adjuvant Blends on Droplet Adhesion on Cabbage Leaf**

| **TSA-1-A (%)** | **TSA-2-A (%)** | **Droplet Adhesion % ^{a.}** | | Predicted 0.10% | Predicted 0.20% |
|---|---|---|---|---|---|
| | | **0.1% (w/v)** | **0.2% (w/v)** | | |
| 100 | 0 | 49 f | 64 de | 49 | 64 |
| 40 | 60 | 69 cd | 86 ab | 58 | 74 |
| 30 | 70 | 48 f | 88 a | 60 | 75 |
| 20 | 80 | 59 e | 73 c | 61 | 77 |
| 0 | 100 | 64 de | 80 b | 64 | 80 |

| | | | | | |
|---|---|---|---|---|---|
| a. Means sharing common postscripts (e.g., ab and a and b) are not statistically significantly different (P0.05, LSD test). | | | | | |

### Example 4 - Effect of Adjuvant on Uptake of ¹⁴C-Glyphosate Isopropylamine salt into Bean-leaf (Vicia faba).

Certain agrochemicals, such as systemic herbicides, should penetrate or absorb into foliar surfaces (leaves) to be most effective. Many herbicides require a "Rain-free" period after application to provide time for adequate absorption into the leaf. If rain occurs too soon after an agrochemical application, there is a significant risk of wash-off, thereby increasing the potential of an unacceptable spray application with certain formulations. For example, 2,4-D Amine can require 1-6 hours after application, while glyphosate can require 2-6 hours (Duncan, C; Factors Affecting Herbicide Performance; Jan. 05, 2018; Techline Invasive Plant News). In both cases, the type of formulation will play a role in speed of absorptions.

Trisiloxane alkoxylates containing about 7-9 alkyleneoxide units (i.e. polyoxyethylene or polyoxyethylene/polyoxypropylene copolymers) can facilitate rapid uptake via stomatal flooding (infiltration). Stomatal flooding occurs rapidly (≤10 minutes after application). Agrochemicals taken into the plant in this way become rainfast, because they have migrated into the substomatal cavity of the leaf (inside the leaf) and therefore are resistant to wash-off by subsequent rainfall. This is a significant advantage, because it increases the reliability of agrochemical sprays.

The impact of the TSA-1/TSA-2 blends on the uptake of ¹⁴C-glyphosate (herbicide) solutions into bean leaf *(Vicia fava*) was determined at 10 minutes after application, according to the method described by Stevens et al., Contributions of stomatal infiltration and cuticular penetration to enhancements of foliar uptake by surfactants. Pestic. Sci., 33, 371-382, to establish the contribution of trisiloxane alkoxylate (TSA) surfactants on the speed of uptake, via stomatal infiltration.). Here glyphosate solutions containing 0.4 % TSA surfactant was applied to bean leaf using a micro-syringe. At 10 minutes after application, the leaf was washed with aqueous ethanol and uptake was determined by subtraction, using a scintillation counter to measure residual ¹⁴C-glyphosate-IPA salt (Stevens et al. Pestic. Sci., 33, 371-382).

Table 5 demonstrates that unexpectedly, compositions of the present invention significantly enhanced glyphosate uptake into the bean leaf, at 10 minutes after application. Blends of TSA-1-A and TSA-2-A (Run ID Nos. 2, 3, 4, 5 and 7) demonstrated uptake beyond what would be predicted from the addition of the two components. Uptake was unexpectedly increased between 2X and 6X the predicted value (weighted average for corresponding TSA-1 and TSA-2 blends) and demonstrated the synergy of combinations in accordance with the invention. Although TSA-1-A provided a high level of infiltration into bean leaf, as expected, it was unexpected that blends of TSA-1-A and TSA-2-A would provide a significant increase in uptake beyond that possible with TSA-1-A alone, especially since the contribution towards infiltration from TSA-2-A alone was negligible (0.1%). Similarly, the blend of TSA-1-B with TSA-2-A exhibited a 192% increase of the predicted weighted average predicted value for uptake.

**Table 5 - Impact of TSA Adjuvant (0.4%) on the Uptake of ¹⁴C-glyphosate into Bean at 10 Minutes After Application**

| **Run** | **Blend Ratio %** | | | **Uptake (%)** | **Uptake (%)** | **Obs-Pred** | **Uptake** |
|---|---|---|---|---|---|---|---|
| **ID** | **TSA-1-B** | **TSA-1-A** | **TSA-2-A** | **Observed** | **Predicted** | | **Increase** |
| 1 | 0 | 100 | 0 | 41.1 c | 41.1 | NA | NA |
| 2 | 0 | 50 | 50 | 69.3 b | 20.6 | 48.7 | 236% |
| 3 | 0 | 40 | 60 | 79.5 ab | 16.5 | 63.0 | 382% |
| 4 | 0 | 30 | 70 | 96.3 a | 12.4 | 83.9 | 677% |
| 5 | 0 | 20 | 80 | 55.1 bc | 8.3 | 46.8 | 564% |
| 6 | 0 | 0 | 100 | 0.1 d | 0.1 | NA | NA |
| 7 | 50 | 0 | 50 | 60.4 bc | 39.7 | 20.7 | 192% |
| 8 | 100 | 0 | 0 | 79.3 ab | 79.3 | NA | NA |

| | | | | | | | |
|---|---|---|---|---|---|---|---|
| a. Mean values sharing common postscripts are not significantly different (P0.05, LSD test). | | | | | | | |

### Example 5 - Spread Properties of TSA Blends on a Polystyrene Surface

Spreading was determined on an artificial surface using 0.1% (active) surfactant. TSA solutions were prepared in deionized water that was further purified with a Milli-Q ultrapure filtration system (Millipore Corp.). Thereafter, a 10 µL drop was placed on a polystyrene surface (Petri-dish) and the spread diameter measured (mm) after 30 seconds, while maintaining a relative humidity between 35 and 70 %). Table 6 illustrates that the spreading properties for TSA-Blends of the present invention exhibited an unexpected increase in spreading, relative to a linear additive predicted value (weighted average of the spread value for the individual components). Blends containing a TSA-2 component with greater than 20% EO yielded an unexpected improvement in the spread diameter, over the predicted value for the blends. However, TSA-Blends containing TSA-2-B, which has less than or equal to 20% EO in the polyether chain, only exhibited improved spreading at blend ratios of 60% TSA-2-B or less. TSA-2-B levels above 60% appeared to be antagonistic toward spreading, indicating that under certain situations, such as those, TSA-2 components with low water solubility/dispersibility should be limited to 60% in the blend with TSA-1-A type components (EO/PO based), or used with TSA-1-B type components which have a higher level of water solubility/ dispersibilisty to overcome the low water solubility of low EO containing TSA-2 type adjuvants (≤20 wt% EO).

**Table 6 - Spreading of TSA Blends on Polystyrene at 0.1% Adjuvant**

| | | | **Spread Area diameter on Polystyrene at 0.1%** | | **Spread** |
|---|---|---|---|---|---|
| Treatment | **Adjuvant** | **Blend Ratio (%)** | **Observed** | **Predicted** | **Improvement** |
| 1 | TSA-1-A | 100/0 | 46.3 | 46.3 | NA |
| 2 | TSA-1-A/ TSA-2-A | 70/30 | 40.5 | 36.2 | 12% |
| 3 | TSA-1-A/ TSA-2-A | 50/50 | 44.3 | 29.5 | 50% |
| 4 | TSA-1-A/ TSA-2-A | 40/60 | 41.0 | 26.2 | 57% |
| 5 | TSA-1-A/ TSA-2-A | 30/70 | 33.5 | 22.8 | 47% |
| 6 | TSA-1-A/ TSA-2-A | 20/80 | 24.3 | 19.5 | 0.2 |
| 7 | TSA-1-A/ TSA-2-A | 10/90 | 11.0 | 16.1 | -0.3 |
| 8 | TSA-2-A | 0/100 | 12.8 | 12.8 | NA |
| 9 | TSA-1-A | 100/0 | 46.3 | 46.3 | NA |
| 10 | TSA-1-A/ TSA-2-B | 70/30 | 35.5 | 33.9 | 5% |
| 11 | TSA-1-A/ TSA-2-B | 50/50 | 30.8 | 25.6 | 20% |
| 12 | TSA-1-A/ TSA-2-B | 40/60 | 23.8 | 21.5 | 10% |
| 13 | TSA-1-A/ TSA-2-B | 30/70 | 12.3 | 17.4 | -0.3 |
| 14 | TSA-1-A/ TSA-2-B | 20/80 | 9.0 | 13.3 | -32% |
| 15 | TSA-1-A/ TSA-2-B | 10/90 | 5.3 | 9.1 | -42% |
| 16 | TSA-2-B | 0/100 | 5.0 | 5.0 | NA |
| 17 | TSA-1-A | 100/0 | 46.3 | 46.3 | NA |
| 18 | TSA-1-A/ TSA-2-C | 70/30 | 45.0 | 43.7 | 3% |
| 19 | TSA-1-A/ TSA-2-C | 50/50 | 47.0 | 42.0 | 0.1 |
| 20 | TSA-1-A/ TSA-2-C | 40/60 | 45.0 | 41.2 | 9% |
| 21 | TSA-1-A/ TSA-2-C | 30/70 | 45.0 | 40.3 | 12% |
| 22 | TSA-1-A/ TSA-2-C | 20/80 | 43.0 | 39.5 | 9% |
| 23 | TSA-1-A/ TSA-2-C | 10/90 | 43.3 | 38.6 | 12% |
| 24 | TS-A-2-C | 0/100 | 37.8 | 37.8 | NA |
| 25 | TSA-1-A | 100/0 | 46.3 | 46.3 | NA |
| 26 | TSA-1-A/ TSA-2-D | 70/30 | 37.0 | 33.9 | 9% |
| 27 | TSA-1-A/ TSA-2-D | 50/50 | 35.3 | 25.6 | 38% |
| 28 | TSA-1-A/ TSA-2-D | 40/60 | 29.3 | 21.5 | 36% |
| 29 | TSA-1-A/ TSA-2-D | 30/70 | 23.5 | 17.4 | 35% |
| 30 | TSA-1-A/ TSA-2-D | 20/80 | 15.3 | 13.3 | 15% |
| 31 | TSA-1-A/ TSA-2-D | 10/90 | 9.0 | 9.1 | -1% |
| 32 | TS-A-2-D | 0/100 | 5.0 | 5.0 | NA |
| 33 | TSA-1-A | 100/0 | 46.3 | 46.3 | NA |
| 34 | TSA-1-A/ TSA-2-E | 70/30 | 42.5 | 34.0 | 25% |
| 35 | TSA-1-A/ TSA-2-E | 50/50 | 39.0 | 25.9 | 51% |
| 36 | TSA-1-A/ TSA-2-E | 40/60 | 31.8 | 21.8 | 46% |
| 37 | TSA-1-A/ TSA-2-E | 30/70 | 29.0 | 17.7 | 64% |
| 38 | TSA-1-A/ TSA-2-E | 20/80 | 15.8 | 13.7 | 15% |
| 39 | TSA-1-A/ TSA-2-E | 10/90 | 7.0 | 9.6 | -27% |
| 40 | TS-A-2-E | 0/100 | 5.5 | 5.5 | NA |

### Example 6: Spreading Properties of Trisiloxane Alkoxylate Blends (0.4%) on Cabbage leaf

Spreading was determined on cabbage-leaf (Natural surface) using the method outlined in Example 1, with the exception of the use rate. In this example, spreading was determined with the TSA surfactants comprising 0.4% of the applied agricultural composition.

Table 7 illustrates that TSA blends of the present invention provide improved spreading relative to the level of spreading predicted by a linear weighted average of the two components. All blends unexpectedly gave between a 36% and 88% increase in spreading over the predicted value.

**Table 7 - Spread Properties of TSA Blends on Cabbage-Leaf (0.4% adjuvant)**

| | | | **Spread Area (mm2) at 0.4%** | | **Spread** |
|---|---|---|---|---|---|
| Treatment | **Adjuvant** | **Blend Ratio (%)** | **Observed** | **Predicted** | **Improvement** |
| 1 | TSA-1-A | 100/0 | 183.4 a | 183.4 | NA |
| 2 | TSA-1-A/ TSA-2-A | 50/50 | 160.3 c | 95.0 | 69% |
| 3 | TSA-1-A/ TSA-2-A | 40/60 | 141.8 e | 77.4 | 83% |
| 4 | TSA-1-A/ TSA-2-A | 30/70 | 110.1 hi | 59.7 | 84% |
| 5 | TSA-1-A/TSA-2-A | 20/80 | 79.1 k | 42.0 | 88% |
| 6 | TSA-2-A | 0/100 | 6.7 o | 6.7 | NA |
| 7 | TSA-1-A | 100/0 | 183.4 a | 183.4 | NA |
| 8 | TSA-1-A/ TSA-2-B | 50/50 | 138.3 e | 94.1 | 47% |
| 9 | TSA-1-A/ TSA-2-B | 40/60 | 121.6 g | 76.2 | 60% |
| 10 | TSA-1-A/ TSA-2-B | 30/70 | 87.8 j | 58.3 | 51% |
| 11 | TSA-1-A/ TSA-2-B | 20/80 | 57.3 1 | 40.4 | 42% |
| 12 | TSA-2-B | 0/100 | 4.7 o | 4.7 | NA |
| 13 | TSA-1-A | 100/0 | 183.4 a | 183.4 | NA |
| 14 | TSA-1-A/TSA-2-C | 50/50 | 170.5 b | 112.9 | 51% |
| 15 | TSA-1-A/ TSA-2-C | 40/60 | 152.3 d | 98.8 | 54% |
| 16 | TSA-1-A/ TSA-2-C | 30/70 | 130.1 f | 84.7 | 54% |
| 17 | TSA-1-A/ TSA-2-C | 20/80 | 112.8 h | 70.6 | 60% |
| 18 | TS-A-2-C | 0/100 | 42.4 n | 42.4 | NA |
| 19 | TSA-1-A | 100/0 | 183.4 a | 183.4 | NA |
| 20 | TSA-1-A/TSA-2-D | 50/50 | 132.2 f | 93.1 | 42% |
| 21 | TSA-1-A/ TSA-2-D | 40/60 | 106.5 i | 75.0 | 42% |
| 22 | TSA-1-A/ TSA-2-D | 30/70 | 81.2 k | 56.9 | 43% |
| 23 | TSA-1-A/ TSA-2-D | 20/80 | 55.9 lm | 38.8 | 44% |
| 24 | TS-A-2-D | 0/100 | 2.7 o | 2.7 | NA |
| 25 | TSA-1-A | 100/0 | 183.4 a | 183.4 | NA |
| 26 | TSA-1-A/ TSA-2-E | 50/50 | 131.5 f | 92.6 | 42% |
| 27 | TSA-1-A/ TSA-2-E | 40/60 | 106.7 i | 74.4 | 43% |
| 28 | TSA-1-A/ TSA-2-E | 30/70 | 80.3 k | 56.2 | 43% |
| 29 | TSA-1-A/ TSA-2-E | 20/80 | 51.7 m | 38.0 | 36% |
| 30 | TS-A-2-E | 0/100 | 1.7 o | 1.7 | NA |

| | | | | | |
|---|---|---|---|---|---|
| a. Means sharing common postscripts are not significantly different (P0.05, LSD test). | | | | | |

### Example 7 - The Effect of TSA Blends on Uptake of ¹⁴C-glyphosate Glyphosate-Isopropyl Amine

The uptake by stomatal infiltration of ¹⁴C-glyphosate-isopropyl amine salt into bean-leaf *(Vicia faba*) at 10 minutes after application was determined as outlined in Example 4.

Tables 8A-D demonstrate that the compositions of the present invention provide an increase in uptake of glyphosate relative to the predicted value based on a linear regression. As with spreading, the blends containing TSA-2 components that show this synergy also provide spreading diameters greater than or equal to 20 mm (on a polystyrene surface).

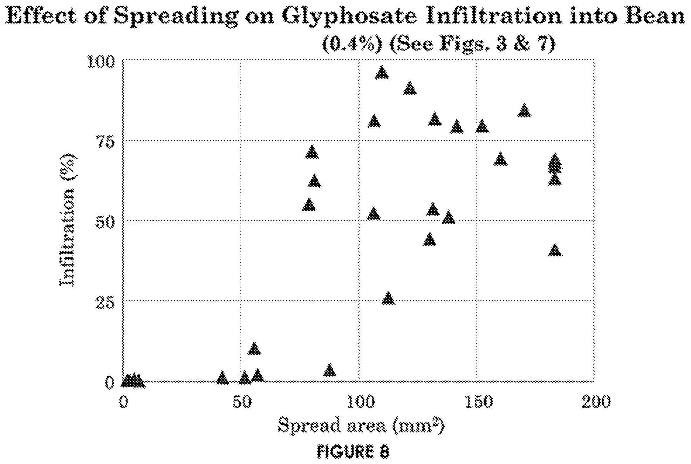

For example, the TSA-1-A/TSA-2-B blends provide improved uptake when the TSA-2 component was present at a level less than 70 wt% (Table 8A). This also corresponds to the concentration where spreading exceeds the 20 mm spread diameter, which appears to be important for stomatal infiltration (See Spreading Example 5, Table 6, Treatments 12 to 13, and Fig. 8).

**Table 8A - Impact of TSA Adjuvant (0.4%) on the Uptake of ¹⁴C-glyphosate into Bean at 10 Minutes After Application (TSA-1-A and TSA-1-B with TSA-2-B)**

| **Run** | **Blend %** | | | **Uptake (%)** | **Uptake (%)** | **Obs-Pred** | **Uptake** |
|---|---|---|---|---|---|---|---|
| **ID** | **TSA-1-B** | **TSA-1-A** | **TSA-2-B** | **Observed** | **Predicted** | | **Increase** |
| 1 | 0 | 100 | 0 | 68.0 b | 68.0 | | |
| 2 | 0 | 50 | 50 | 51.1 c | 34.4 | 16.8 | 49% |
| 3 | 0 | 40 | 60 | 91.5 a | 27.6 | 63.9 | 231% |
| 4 | 0 | 30 | 70 | 3.6 d | 20.9 | -17.3 | -83% * |
| 5 | 0 | 20 | 80 | 2.0 d | 14.2 | -12.2 | -86% * |
| 6 | 0 | 0 | 100 | 0.7 d | 0.7 | | |
| 7 | 50 | 0 | 50 | 83.5 ab | 45.5 | 38.1 | 84% |
| 8 | 100 | 0 | 0 | 90.2 a | 90.2 | | |

| | | | | | | | |
|---|---|---|---|---|---|---|---|
| * Spread diameter was < 20 mm. (See Example, 5 Table 6, Treatments 13, 14 and 15) | | | | | | | |

**Table 8B - Impact of TSA Adjuvant (0.4%) on the Uptake of ¹⁴C-glyphosate into Bean at 10 Minutes After Application (TSA-1-A with TSA-2-C)**

| **Run ID** | **Blend Ratio** | | **Uptake (%)** | **Uptake (%)** | **Obs-Pred** | **Increase Vs.** |
|---|---|---|---|---|---|---|
| | **TSA-1-A** | **TSA-2-C** | **Observed** | **Predicted** | | **Predicted** |
| 1 | 100 | 0 | 66.9 a | 66.9 | NA | |
| 2 | 70 | 30 | 84.0 a | 46.9 | 37.1 | 79% |
| 3 | 50 | 50 | 84.4 a | 33.5 | 50.9 | 152% |
| 4 | 40 | 60 | 79.6 a | 26.8 | 52.8 | 197% |
| 5 | 30 | 70 | 44.3 b | 20.1 | 24.2 | 120% |
| 6 | 20 | 80 | 26.1 b | 13.5 | 12.6 | 94% |
| 7 | 0 | 100 | 0.1 c | 0.1 | NA | |

**Table 8C - Impact of TSA Adjuvant (0.4%) on the Uptake of ¹⁴C-glyphosate into Bean at 10 Minutes After Application (TSA-1-A and TSA-1-B with TSA-2-D)**

| **Run** | **Blend Ratio %** | | | **Uptake (%)** | **Uptake (%)** | **Obs-Pred** | **Uptake** |
|---|---|---|---|---|---|---|---|
| **ID** | **TSA-1-B** | **TSA-1-A** | **TSA-2-D** | **Observed** | **Predicted** | | **Increase** |
| 1 | 0 | 100 | 0 | 69.2 be | 69.2 | NA | NA |
| 2 | 0 | 50 | 50 | 81.8 ab | 34.8 | 47.1 | 135% |
| 3 | 0 | 40 | 60 | 52.4 d | 27.9 | 24.5 | 88% |
| 4 | 0 | 30 | 70 | 62.5 cd | 21.0 | 41.5 | 198% |
| 5 | 0 | 20 | 80 | 10.2 e | 14.1 | -3.9 | -28% |
| 6 | 0 | 0 | 100 | 0.3 e | 0.3 | NA | NA |
| 7 | 50 | 0 | 50 | 72.8 ab | 44.2 | 28.7 | 65% |
| 8 | 100 | 0 | 0 | 88.0 ab | 88.0 | NA | NA |

| | | | | | | | |
|---|---|---|---|---|---|---|---|
| ^{∗} Spread diameter was < 20 mm. (See Example, 5 Table 6; Treatment 30) | | | | | | | |

**Table 8D - Impact of TSA Adjuvant (0.4%) on the Uptake of ¹⁴C-glyphosate into Bean at 10 Minutes After Application (TSA-1-A and TSA-1-B with TSA-2-E)**

| **Run** | **Blend Ratio %** | | | **Uptake (%)** | **Uptake (%)** | **Obs-Pred** | **Uptake** |
|---|---|---|---|---|---|---|---|
| **ID** | **TSA-1-B** | **TSA-1-A** | **TSA-2-E** | **Observed** | **Predicted** | | **Increase** |
| 1 | 0 | 100 | 0 | 63.2 be | 63.2 | NA | |
| 2 | 0 | 50 | 50 | 53.7 c | 31.75 | 21.95 | 69% |
| 3 | 0 | 40 | 60 | 81.3 ab | 25.46 | 55.84 | 219% |
| 4 | 0 | 30 | 70 | 71.6 abc | 19.17 | 52.43 | 274% |
| 5 | 0 | 20 | 80 | 1.2 e | 12.88 | -11.68 | -91%* |
| 6 | 0 | 0 | 100 | 0.3 e | 0.3 | NA | |
| 7 | 50 | 0 | 50 | 32.7 d | 43.1 | -10.4 | -24%* |
| 8 | 100 | 0 | 0 | 85.9 a | 85.9 | NA | |

| | | | | | | | |
|---|---|---|---|---|---|---|---|
| ^{∗} Spread diameter was < 20 mm. (See Example 5, Table 6; Treatments 38 and 39 ) Additionally, Table 5 and Tables 8A-D are summarized in Fig. 3, which demonstrates the effect of molecular weight of the TS-2 component on stomatal infiltration. Components TS-2A, TS-2E and TS-2D all contain approximately the same wt% EO (33-35%). The difference is related to the length of the polyalkylene epoxide portion of the surfactant (Table 2). For these three surfactants, as the MW of the TS-2 component increases, the maximum synergy was observed at 70 wt% TS-2A (MW =1782) to approximately 50 wt% for TS-2D (MW =4172), thereby indicating as the MW of the TS-2 component increases, the maximum level of synergy is achieved at a blend ratio containing about 50% TS-2D (Figure 3). | | | | | | | |

### Example 8: Influence of TSA Blends on Dynamic Surface Tension

Dynamic surface tension (DST) was measured using a Kruss Maximum Bubble Pressure tensiometer. TSA solutions were prepared at 0.4wt% in deionized water, further purified with a Milli-Q ultrapure filtration system (Millipore Corp.). The data for surface tension vs time (milliseconds) was plotted and then the surface tension was calculated from a trend line to generate surface tension data at 75, 100, 150 and 200 milliseconds (mSec).

Surprisingly, some of the mixtures of the TSA-1 and TSA-2 yielded a lower DST than the individual TSA components alone, i.e., lower than the additive prediction. For example, this is observed with the 50/50 blend of TSA-1-A with TSA-2-C for DST between 75 and 200 mSec (Table 9).

Additionally, Table 9 shows the synergistic interaction for various blends of the TSA-1 and the TSA-2 components. Bold italics indicates a lower DST relative to either the TSA-1 or the TSA-2 component alone. Likewise, similar results were observed for TSA-1-B mixtures with TSA-2-A, where the blends exhibited a synergy, observed as a lower DST than the individual components alone.

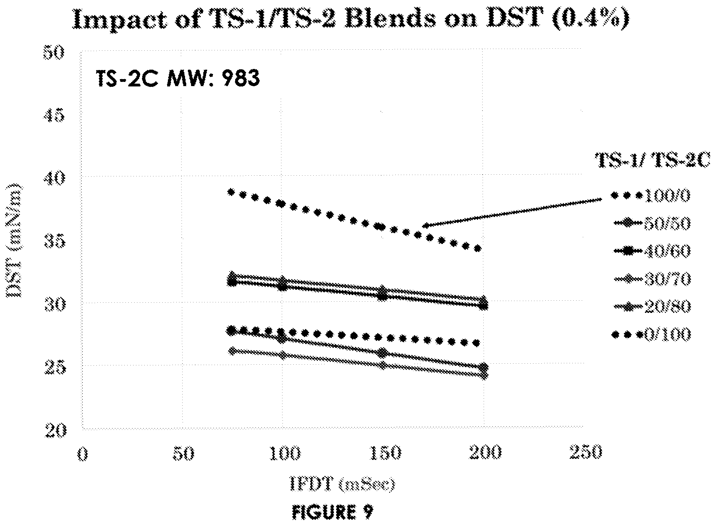

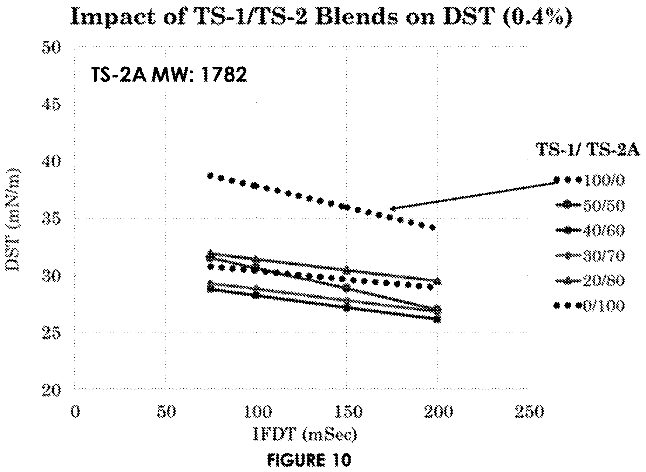

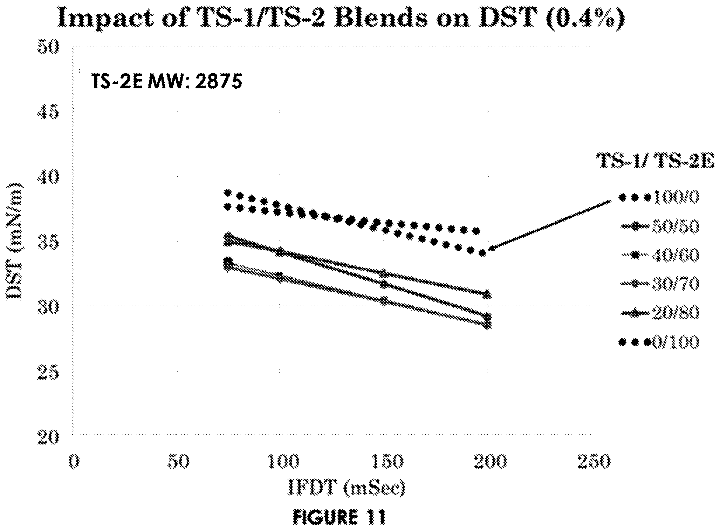

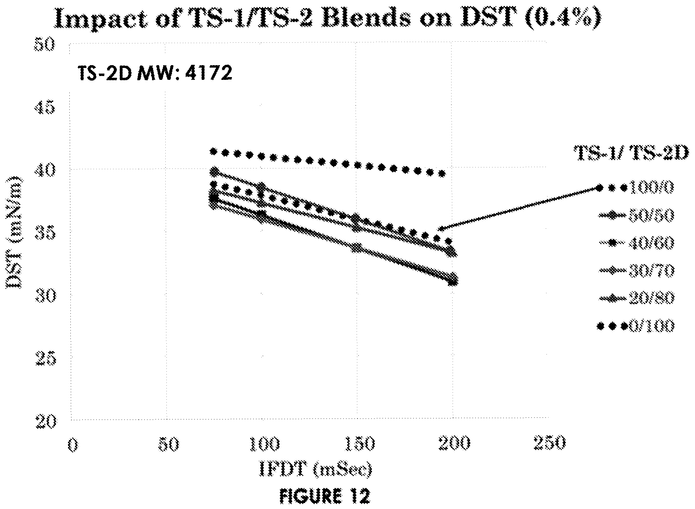

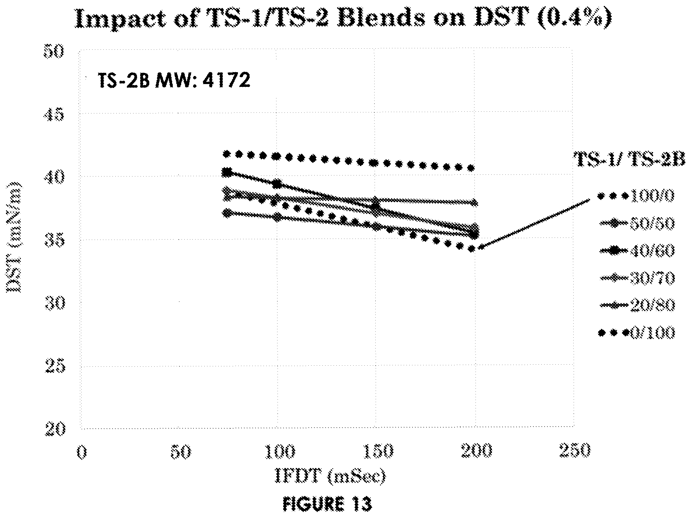

This synergistic effect is further illustrated in Figs. 9-13, where the DST of the TS-2 component increased with MW. Additionally, within each set of TS-1/TS-2 mixtures, as the MW of the TS-2 component increased, the DST for the mixtures tended to provide an increasing level of synergy, as indicated by a DST lower than that of either of the TS-1 or TS-2 component alone.

**Table 9-Impact of TSA Blends on Dynamic Surface Tension (mN/m)**

| **IFDT (mSec) *** | **TSA-1/ TSA-2 Ratio** | | | | | |
|---|---|---|---|---|---|---|
| **TSA-1-A/ TSA-2-C** | **100/0** | **50/50** | **40/60** | **30/70** | **20/80** | **0/100** |
| | | | | | | |
| 75 | 38.7 | ***27.7*** | 31.7 | ***26.2*** | 32.1 | 27.9 |
| 100 | 37.8 | ***27.1*** | 31.3 | ***25.7*** | 31.7 | 27.6 |
| 150 | 35.9 | ***25.9*** | 30.4 | ***24.9*** | 30.9 | 27.1 |
| 200 | 34.0 | ***24.7*** | 29.6 | ***24.1*** | 30.1 | 26.6 |

| **TSA-1-A/ TSA-2-A** | **10010** | **50/50** | **40/60** | **30/70** | **20/80** | **0/100** |
|---|---|---|---|---|---|---|
| 75 | 38.7 | 31.6 | ***28.7*** | ***29.2*** | 31.9 | 30.8 |
| 100 | 37.8 | 30.6 | ***28.2*** | ***28.7*** | 31.4 | 30.4 |
| 150 | 35.9 | ***28.8*** | ***27.2*** | ***27.8*** | 30.5 | 29.6 |
| 200 | 34.0 | ***27.0*** | ***26.1*** | ***26.8*** | 29.5 | 28.9 |

| **TSA-1-A/ TSA-2-B** | **10010** | **50/50** | **40/60** | **30/70** | **20/80** | **0/100** |
|---|---|---|---|---|---|---|
| 75 | 38.7 | ***37.1*** | 40.3 | 38.8 | 38.3 | 41.7 |
| 100 | 37.8 | ***36.7*** | 39.3 | 38.2 | 38.2 | 41.5 |
| 150 | 35.9 | 35.9 | 37.3 | 37.0 | 38.0 | 41.0 |
| 200 | 34.0 | 35.1 | 35.4 | 35.8 | 37.8 | 40.5 |

| **TSA-1-A/ TSA-2-E** | **10010** | **50/50** | **40/60** | **30/70** | **20/80** | **0/100** |
|---|---|---|---|---|---|---|
| 75 | 38.7 | ***35.4*** | ***33.3*** | ***33.0*** | ***35.0*** | 37.6 |
| 100 | 37.8 | ***34.1*** | ***32.3*** | ***32.1*** | ***34.2*** | 37.2 |
| 150 | 35.9 | ***31.7*** | ***30.4*** | ***30.3*** | ***32.5*** | 36.4 |
| 200 | 34.0 | ***29.2*** | ***28.5*** | ***28.6*** | ***30.9*** | 35.7 |

| **TSA-1-A/TSA-2-D** | **10010** | **50/50** | **40/60** | **30/70** | **20/80** | **0/100** |
|---|---|---|---|---|---|---|
| 75 | 38.7 | 39.8 | **37.6** | ***37.0*** | **38.2** | 41.3 |
| 100 | 37.8 | 38.4 | ***36.2*** | ***35.9*** | ***37.2*** | 40.9 |
| 150 | 35.9 | ***35.7*** | ***33.6*** | ***33.6*** | ***35.2*** | 40.2 |
| 200 | 34.0 | ***33.0*** | ***30.9*** | ***31.3*** | ***33.2*** | 39.4 |

| **TSA-1-B/ TSA-2-A** | **100/0** | **50/50** | **40/60** | **30/70** | **20/80** | **0/100** |
|---|---|---|---|---|---|---|
| 75 | 49.5 | ***40.7*** | ***41.2*** | ***41.3*** | 41.9 | 41.5 |
| 100 | 47.6 | ***38.7*** | ***39.4*** | ***39.8*** | 40.4 | 40.3 |
| 150 | 43.9 | ***34.7*** | ***36.0*** | ***36.7*** | ***37.4*** | 38.0 |
| 200 | 40.1 | ***30.6*** | ***32.5*** | ***33.6*** | ***34.4*** | 35.7 |

| | | | | | | |
|---|---|---|---|---|---|---|
| * IFDT - Interface Development Time | | | | | | |

### Example 9 - Aqueous equilibrium surface tension of TSA blends

The aqueous surface tension was measured using a Kruss 11, equilibrium surface tensiometer with a platinum blade as the sensor. 0.1 and 0.4 wt%. TSA solutions were prepared in deionized water, further treated with a Milli-Q Ultra-pure filtration system (Millipore).

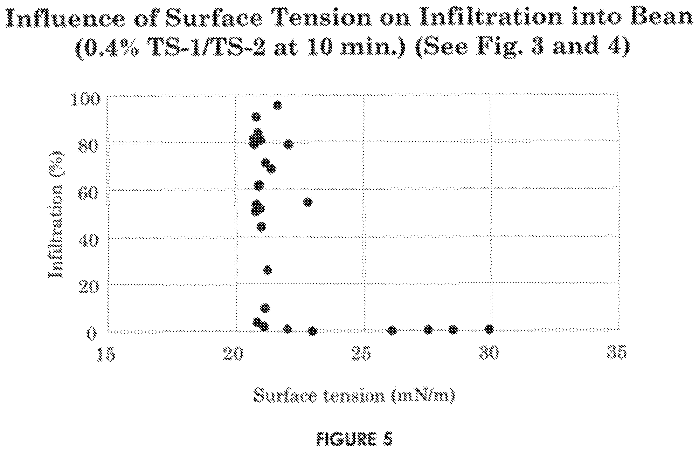

Table 10 demonstrates that all of the products that provided greater than 10% stomatal infiltration, as described in Example 7, had an equilibrium surface tension of ≤23 mN/m. Although not all TSAs that have a surface tension value of ≤23 mN/m gave stomatal infiltration, this demonstrates that a low aqueous equilibrium surface tension is one important factor for enhancing infiltration (See Fig. 5).

**Table 10 - Effect of Aqueous Surface Tension on Infiltration into Bean-leaf**

| Treatment | **TSA-1-A/ TSA-2-C** | **Surface Tension (mN/m; 0.1%)** | **Surface Tension (mN/m; 0.4%)** | **Infiltration (%)** |
|---|---|---|---|---|
| 1 | 100/0 | 20.7 | 20.9 | 66.9 |
| 2 | 50/50 | 20.8 | 20.9 | 84.4 |
| 3 | 40/60 | 20.8 | 20.7 | 79.6 |
| 4 | 30/70 | 20.8 | 21.0 | 44.3 |
| 5 | 20/80 | 21.1 | 21.3 | 26.1 |
| 6 | 0/100 | 22.7 | 23.0 | 0.1 |

| | **TSA-1-A/ TSA-2-A** | | | |
|---|---|---|---|---|
| 7 | 100/0 | 20.7 | 20.9 | 41.1 |
| 8 | 50/50 | 21.4 | 21.4 | 69.3 |
| 9 | 40/60 | 22.2 | 22.1 | 79.5 |
| 10 | 30/70 | 22.1 | 21.6 | 96.3 |
| 11 | 20/80 | 22.7 | 22.8 | 55.1 |
| 12 | 0/100 | 26.1 | 26.1 | 0.1 |

| | **TSA-1-A/ TSA-2-D** | | | |
|---|---|---|---|---|
| 13 | 100/0 | 20.7 | 20.9 | 69.2 |
| 14 | 50/50 | 20.9 | 20.7 | 81.8 |
| 15 | 40/60 | 20.9 | 20.9 | 52.4 |
| 16 | 30/70 | 20.9 | 20.9 | 62.5 |
| 17 | 20/80 | 21.3 | 21.1 | 10.2 |
| 18 | 0/100 | 26.6 | 27.5 | 0.3 |

| | **TSA-1-A/ TSA-2-E** | | | |
|---|---|---|---|---|
| 19 | 100/0 | 20.7 | 20.9 | 63.2 |
| 20 | 50/50 | 20.9 | 20.9 | 53.7 |
| 21 | 40/60 | 20.9 | 21.0 | 81.3 |
| 22 | 30/70 | 21.0 | 21.2 | 71.6 |
| 23 | 20/80 | 21.7 | 22.0 | 1.2 |
| 24 | 0/100 | 28.2 | 29.9 | 0.3 |

| | **TSA-1-A/ TSA-2-B** | | | |
|---|---|---|---|---|
| 25 | 100/0 | 20.7 | 20.9 | 68.0 |
| 26 | 50/50 | 20.4 | 20.8 | 51.1 |
| 27 | 40/60 | 21.0 | 20.8 | 91.5 |
| 28 | 30/70 | 21.4 | 20.9 | 3.6 |
| 29 | 20/80 | 21.6 | 21.1 | 2.0 |
| 30 | 0/100 | 28.6 | 28.5 | 0.7 |

### Example 10 - Utility of the Invention

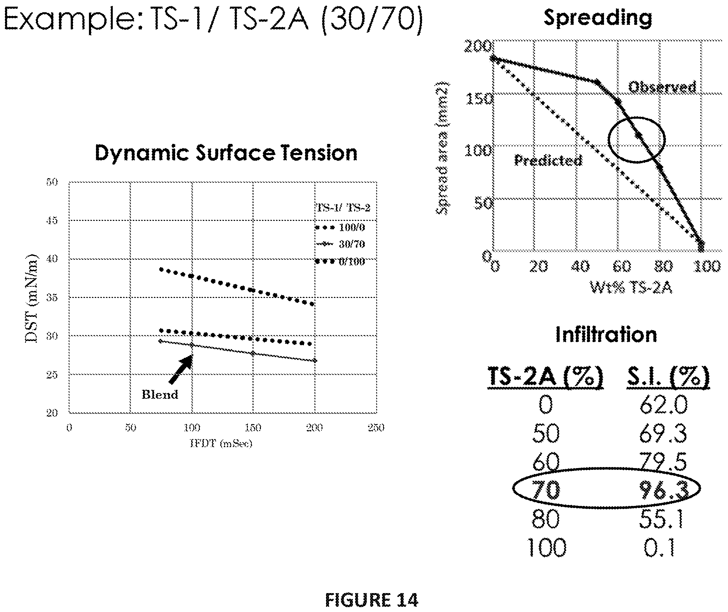

This example demonstrates a benefit of using a mixture of at least two trisiloxane alkoxylates in accordance with the invention. For example, if a formulator intended to develop an adjuvant composition that would provide a minimum spread area of 80 mm², and achievea high level of stomatal infiltration, along with a dynamic surface tension (DST) below 30 mN/m (Between 75 and 200 milliseconds). Figure 14 shows that this can be achieved using a mixture containing 30 wt% TS-1 and 70 wt% TS-2A. The individual TS components are unable to provide the desired result, while the TS-1/ TS-2A mixture provides a Spread Area of over 100 mm²; a DST below 30 mN/m across the desired range and a stomatal infiltration value, significantly higher than possible with either TS-1 or TS-2A alone. This therefore illustrates the synergy, utility, flexibility and benefit of a mixed TS composition in accordance with the invention.

## Claims

1. An organosilicone surfactant composition, comprising a combination of a first surfactant TSA-1 and a second surfactant TSA-2, wherein:
(1) TSA-1 has the general formula (I):
M¹DM² (I)
where
M¹ = (R¹)(R²)(R³)SiO_{0.5}
M² = (R⁴)(R⁵)(R⁶)SiO_{0.5}
D = (R⁷)(R⁸)SiO
where
R¹ R² R³ R⁴ R⁵ and R⁷ are independently selected from the group consisting of monovalent hydrocarbon radicals having from 1-4 carbon atoms,
either (R⁶ is R⁹ and R⁸ is Z) or (R⁶ is Z and R⁸ is R⁹),
R⁹ is a monovalent hydrocarbon radical having from 1-4 carbon atoms
Z is a polyalkyleneoxide group of the general formula:
-R¹⁰ -O-[C₂H₄O ]a-[C₃H₆O ]_{b} -[C₄H₈ O]_{c}-R¹¹ ,
where
R¹⁰ is a linear or branched divalent hydrocarbon group of 3 to 4 carbon atoms
R¹¹ is selected from the group consisting of H or monovalent hydrocarbon radicals of from 1 to 6 carbon atoms and acetyl, where
subscripts a is 2 to 9, b is 0 to 7, and c is 0 to 7, and satisfy the following relationships:
2≤a+b+c<10, and a ≥2 and
with the proviso that when b+c = 0, then a = 5-9,
and
(2) TSA-2 has the general formula
M³D¹M⁴ (II)
where
M³ = (R¹²)(R¹³)(R¹⁴)SiO_{0.5}
M⁴ = (R¹⁵)(R¹⁶)(R¹⁷)SiO_{0.5}
D¹ = (R¹⁸)(R¹⁹)SiO
where
R¹² R¹³ R¹⁴ R¹⁵ R¹⁷ and R¹⁸ are independently selected from the group consisting of monovalent hydrocarbon radicals having from 1-4 carbon atoms
either (R¹⁶ is R²⁰ and R¹⁹ is Q) or (R¹⁶ is Q and R¹⁹ is R²⁰)
R²⁰ is a monovalent hydrocarbon radical having from 1-4 carbon atoms
Q is a polyalkyleneoxide group of the general formula:
-R²²-O-[C₂H₄O ]_{d}-[C₃H₆O ]ₑ-[C₄H₈O]_{f}-R²³ ,
where
subscript d = 3-35, e = 0-50, and f = 0-20, provided that e+f ≥1, and
10≤d+e+f≤75 with d ≥5
R²² is a linear or branched divalent hydrocarbon group of 3 to 4 carbon atoms
R²³ is selected from the group consisting of H, monovalent hydrocarbon radicals of from 1 to 6 carbon atoms and acetyl.

2. The organosilicone surfactant composition of claim 1, wherein, b+c = 0, and a=6-8.

3. The organosilicone surfactant composition of claim 1 wherein, a=5-9, b=0, c=0, d=8-12, e=2-5, f=0, and d+e+f ≥ 10.

4. The organosilicone surfactant composition of claim 1 wherein, a=5-8, b=2-3, c=0, a+b+c < 10, d=7-12, e=20-30, and f=0.

5. The organosilicone surfactant composition of claim 1, wherein, a=5-7, b=2-3, c=0, a+b+c < 10, d=10-12, e=12-18, and f=0 or 1.

6. The organosilicone surfactant composition of claim 1, wherein, a=5-7, b=1-3, c=0, a+b+c < 10, d=10-12, e=12-18, and f=0 or 1.

7. A formulation comprising at least 0.1% of the organosilicone surfactant composition of one of claims 1 to 6, wherein, the formulation has a surface area spread determined in accordance with the method indicated in the description that is at least 20% larger than the non-synergistic additive spread that would be predicted, based on the linearly additive weight percentages of TSA-1 and TSA-2.

8. A formulation comprising at least 0.1% of the organosilicone surfactant composition of one of claims 1 to 6, wherein, the formulation has a droplet adhesion, as a percentage of impacted droplets, when determined in accordance with the method indicated in the description, that is larger than the non-synergistic additive droplet adhesion that would be predicted, based on the linearly additive weight percentages of TSA-1 and TSA-2.

9. A formulation comprising at least 0.1% of the organosilicone surfactant composition of one of claims 1 to 6, wherein, the formulation has a plant uptake, which is determined in accordance with the method indicated in the description, that is larger than the uptake of either TSA-1 or TSA-2.

10. A formulation comprising the surfactants of any one of claims 1-6, also comprising one or more of an herbicide, an insecticide, a fungicide, a plant growth regulator, a biological, a micronutrient or a fertilizer.

11. The formulation of claim 10, wherein the surfactants are present in the formulation at a concentration between 0.1% and 95%.

12. The formulation of claim 10, wherein the surfactants are present in the formulation at a concentration between 2.5% and 70%.

## Patentansprüche

1. Organosilikon-Tensidzusammensetzung, aufweisend eine Kombination aus einem ersten Tensid TSA-1 und einem zweiten Tensid TSA-2, wobei:
(1) TSA-1 die allgemeine Formel (I):
M¹DM² (I)
aufweist, wobei
M¹ = (R¹)(R²)(R³)SiO_{0,5}
M² = (R⁴)(R⁵)(R⁶)SiO_{0,5}
D = (R⁷)(R⁸)SiO
wobei
R¹ R² R³ R⁴ R⁵ und R⁷ unabhängig aus der Gruppe bestehend aus monovalenten Kohlenwasserstoffradikalen mit 1-4 Kohlenstoffatomen ausgewählt sind,
entweder (R⁵ R⁶ ist und R⁸ Z ist) oder (R⁶ Z ist und R⁸ R⁹ ist),
R⁹ ein monovalentes Kohlenwasserstoffradikal mit 1-4 Kohlenstoffatomen ist
Z eine Polyalkylenoxidgruppe der allgemeinen Formel:
-R¹⁰ -O-[C₂H₄O]ₐ-[C₃H₆O]_{b}-[C₄H₈O]_{c}-R¹¹
ist, wobei
R¹⁰ eine lineare oder verzweigtkettige divalente Kohlenwasserstoffgruppe von 3 oder 4 Kohlenstoffatomen ist
R¹¹ aus der Gruppe bestehend aus H oder monovalenten Kohlenwasserstoffradikalen von 1 bis 6 Kohlenstoffatomen und Acetyl ausgewählt ist, wobei
Indizes a 2 bis 9 ist, b 0 bis 7 ist und c 0 bis 7 ist und die folgenden Beziehungen erfüllen:
2≤a+b+c<10 und a≥2 und
unter der Voraussetzung, dass wenn b+c = 0, dann a = 5-9,
und
(2) TSA-2 die allgemeine Formel (II):
M³D¹M⁴ (II)
aufweist, wobei
M³ = (R¹²)(R¹³)(R¹⁴)SiO_{0,5}
M⁴ = (R¹⁵)(R¹⁶)(R¹⁷)SiO_{0,5}
D¹ = (R¹⁸)(R¹⁹) SiO
wobei
R¹² R¹³ R¹⁴ R¹⁵ R¹⁷ und R¹⁸ unabhängig aus der Gruppe bestehend aus monovalenten Kohlenwasserstoffradikalen mit 1-4 Kohlenstoffatomen ausgewählt sind
entweder (R¹⁶ R²⁰ ist und R¹⁹ Q ist) oder (R¹⁶ Q ist und R¹⁹ R²⁰ ist),
R²⁰ ein monovalentes Kohlenwasserstoffradikal mit 1-4 Kohlenstoffatomen ist
Q eine Polyalkylenoxidgruppe der allgemeinen Formel:
-R²² -O-[C₂H₄O]_{d}-[C₃H₆O]ₑ-[C₄H₈O]_{f}-R²³
ist, wobei
Indizes d = 3-35, e = 0-50 und f =0-20 sind, vorausgesetzt dass e+f≥1, und 10≤d+e+f≤75 mit d ≥5
R²² eine lineare oder verzweigtkettige divalente Kohlenwasserstoffgruppe von 3 bis 4 Kohlenstoffatomen ist
R²³ aus der Gruppe bestehend aus H, monovalenten Kohlenwasserstoffradikalen von 1 bis 6 Kohlenstoffatomen und Acetyl ausgewählt ist.

2. Organosilikon-Tensidzusammensetzung nach Anspruch 1, wobei b+c = 0 und a=6-8.

3. Organosilikon-Tensidzusammensetzung nach Anspruch 1, wobei a=5-9, b=0, c=0, d=8-12, e=2-5, f=0 und d+e+f≥ 10.

4. Organosilikon-Tensidzusammensetzung nach Anspruch 1, wobei a=5-8, b=2-3, c=0, a+b+c < 10, d=7-12, e=20-30 und f=0.

5. Organosilikon-Tensidzusammensetzung nach Anspruch 1, wobei a=5-7, b=2-3, c=0, a+b+c < 10, d=10-12, e=12-18 und f=0 oder 1.

6. Organosilikon-Tensidzusammensetzung nach Anspruch 1, wobei a=5-7, b=1-3, c=0, a+b+c < 10, d=10-12, e=12-18 und f=0 oder 1.

7. Formulierung, aufweisend mindestens 0,1% der Organosilikon-Tensidzusammensetzung nach einem der Ansprüche 1 bis 6, wobei die Formulierung eine gemäß dem in der Beschreibung angegebenen Verfahren bestimmte Oberflächenausdehnung aufweist, die mindestens 20% größer ist als die nichtsynergistische additive Ausdehnung, die basierend auf den linear additiven Gewichtsprozentsätzen von TSA-1 und TSA-2 vorhergesagt würde.

8. Formulierung, aufweisend mindestens 0,1% der Organosilikon-Tensidzusammensetzung nach einem der Ansprüche 1 bis 6, wobei die Formulierung eine Tropfenhaftung als Prozentsatz von aufgetroffenen Tropfen bei Bestimmung gemäß dem in der Beschreibung angegebenen Verfahren aufweist, die größer ist als die nichtsynergistische additive Tropfenhaftung, die basierend auf den linear additiven Gewichtsprozentsätzen von TSA-1 und TSA-2 vorhergesagt würde.

9. Formulierung, aufweisend mindestens 0,1% der Organosilikon-Tensidzusammensetzung nach einem der Ansprüche 1 bis 6, wobei die Formulierung eine gemäß dem in der Beschreibung angegebenen Verfahren bestimmte Pflanzenaufnahme aufweist, die größer ist als die Aufnahme von entweder TSA-1 oder TSA-2.

10. Formulierung, aufweisend die Tenside nach einem der Ansprüche 1-6, ferner aufweisend ein Herbizid und/oder ein Insektizid und/oder ein Fungizid und/oder einen Pflanzenwachstumsregulator und/oder ein Biologikum und/oder einen Mikronährstoff und/oder einen Dünger.

11. Formulierung nach Anspruch 10, wobei die Tenside in der Formulierung in einer Konzentration zwischen 0,1% und 95% vorhanden sind.

12. Formulierung nach Anspruch 10, wobei die Tenside in der Formulierung in einer Konzentration zwischen 2,5% und 70% vorhanden sind.

## Revendications

1. Composition de tensioactif organosilicié comprenant une combinaison d'un premier tensioactif TSA-1 et d'un second tensioactif TSA-2, dans laquelle :
(1) le TSA-1 présente la formule générale (I) :
M¹DM² (I),
où
M¹ = (R¹)(R²)(R³)SiO_{0,5}
M² = (R⁴)(R⁵)(R⁶)SiO_{0,5}
D = (R⁷)(R⁸)SiO
où
R¹ R² R³ R⁴ R⁵ et R⁷ sont choisis indépendamment parmi le groupe composé de radicaux hydrocarbonés monovalents présentant de 1-4 atomes de carbone,
soit (R⁶ est R⁹ et R⁸ est Z) soit (R⁶ est Z et R⁸ est R⁹),
R⁹ est un radical hydrocarboné monovalent présentant de 1-4 atomes de carbone et Z est un groupe de polyoxyde d'alkylène de la formule
générale :
-R¹⁰-O-[C₂H₄O]ₐ-[C₃H₆O]_{b}-[C₄H₈O]_{c}-R¹¹,
où
R¹⁰ est un groupe hydrocarboné divalent linéaire ou ramifié de 3 à 4 atomes de carbone,
R¹¹ est choisi parmi le groupe composé de H ou de radicaux hydrocarbonés monovalents de 1 à 6 atomes de carbone et d'acétyle, où
l'indice a est 2 à 9, l'indice b est 0 à 7 et l'indice c est 0 à 7 et satisfont aux relations suivantes :
2 ≤ a +b + c < 10, et a ≥ 2, et
à condition que lorsque b + c = 0, alors a = 5-9,
et
(2) le TSA-2 présente la formule générale (II) :
M³D¹M⁴ (II)
où
M³ = (R¹²)(R¹³)(R¹⁴)SiO_{0,5}
M⁴ = (R¹⁵)(R¹⁶)(R¹⁷)SiO_{0,5}
D¹ = (R¹⁸)(R¹⁹) SiO
où
R¹² R¹³ R¹⁴ R¹⁵ R¹⁷ et R¹⁸ sont choisis indépendamment parmi le groupe composé de radicaux hydrocarbonés monovalents présentant de 1 - 4 atomes de carbone soit (R¹⁶ est R²⁰ et R¹⁹ est Q) soit (R¹⁶ est Q et R¹⁹ est R²⁰),
R²⁰ est un radical hydrocarboné monovalent présentant de 1 - 4 atomes de carbone
Q est un groupe de polyoxyde d'alkylène de la formule générale
-R²²-O-[C₂H₄O]_{d}-[C₃H₆O]ₑ-[C₄H₈O]_{f}-R²³,
où
l'indice d = 3-35, l'indice e = 0-50, et l'indice f = 0-20, si e + f ≥ 1, et 10 ≤ d + e + f ≤ 75 avec d ≥ 5
R²² est un groupe hydrocarboné divalent linéaire ou ramifié de 3 à 4 atomes de carbone
R²³ est choisi parmi le groupe composé de H, de radicaux hydrocarbonés monovalents de 1 à 6 atomes de carbone et d'acétyle.

2. Composition de tensioactif organosilicié selon la revendication 1, dans laquelle b + c = 0, et a = 6-8.

3. Composition de tensioactif organosilicié selon la revendication 1, dans laquelle a= 5-9, b = 0, c = 0, d = 8-12, e = 2-5, f = 0 et d + e + f ≥ 10.

4. Composition de tensioactif organosilicié selon la revendication 1, dans laquelle a= 5-8, b = 2-3, c = 0, a + b + c < 10, d = 7-12, e = 20-30, f = 0.

5. Composition de tensioactif organosilicié selon la revendication 1, dans laquelle a= 5-7, b = 2-3, c = 0, a + b + c < 10, d = 10-12, e = 12-18, f = 0 ou 1.

6. Composition de tensioactif organosilicié selon la revendication 1, dans laquelle a= 5-7, b = 1-3, c = 0, a + b + c < 10, d = 10-12, e = 12-18, f = 0 ou 1.

7. Formulation comprenant au moins 0,1 % de la composition de tensioactif organosilicié selon l'une quelconque des revendications 1 à 6, dans laquelle la formulation présente une répartition de superficie déterminée conformément au procédé indiqué dans la description qui est au moins 20 % plus grande que la répartition additive non synergique qui serait prédite sur la base des pourcentages en poids additifs linéairement des TSA-1 et TSA-2.

8. Formulation comprenant au moins 0,1 % de la composition de tensioactif organosilicié selon l'une quelconque des revendications 1 à 6, dans laquelle la formulation présente une adhérence de gouttelettes, en tant qu'un pourcentage de gouttelettes impactées, lorsqu'elle est déterminée conformément au procédé indiqué dans la description, qui est plus grande que l'adhérence de gouttelettes additive non synergique qui aurait été prédite sur la base des pourcentages de poids additifs linéaires des TSA-1 et TSA-2.

9. Formulation comprenant au moins 0,1 % de la composition de tensioactif organosilicié selon l'une quelconque des revendications 1 à 6, dans laquelle la formulation présente une assimilation par les plantes qui est déterminée conformément au procédé indiqué dans la description, qui est plus grande que l'assimilation de soit le TSA-1 soit le TSA-2.

10. Formulation comprenant les tensioactifs selon l'une quelconque des revendications 1-6, comprenant donc un ou plusieurs parmi un herbicide, un insecticide, un fongicide, un régulateur de croissance de plantes, un agent biologique, un micronutriment ou un engrais.

11. Formulation selon la revendication 10, dans laquelle les tensioactifs sont présents dans la formulation à une concentration entre 0,1 % et 95 %.

12. Formulation selon la revendication 10, dans laquelle les tensioactifs sont présents dans la formulation à une concentration entre 2,5 % et 70 %.
